**Europäisches Patentamt**

**European Patent Office**

**Office européen des brevets**

(19)

(11) Veröffentlichungsnummer: **0 448 559 B1**

(12) **EUROPÄISCHE PATENTSCHRIFT**

(45) Veröffentlichungstag der Patentschrift: **03.08.94**

(51) Int. Cl.⁵: **B64C 39/00**, B64C 11/00

(21) Anmeldenummer: **89905690.7**

(22) Anmeldetag: **05.05.89**

(86) Internationale Anmeldenummer:
**PCT/EP89/00499**

(87) Internationale Veröffentlichungsnummer:
**WO 89/10869 (16.11.89 89/27)**

(54) **SELBSTÄNDIGES ODER IN EINEN FLUGKÖRPER EINSETZBARES HUBTRIEBWERK.**

(30) Priorität: **05.05.88 AT 1169/88**

(43) Veröffentlichungstag der Anmeldung:
**02.10.91 Patentblatt 91/40**

(45) Bekanntmachung des Hinweises auf die
Patenterteilung:
**03.08.94 Patentblatt 94/31**

(84) Benannte Vertragsstaaten:
**DE GB**

(56) Entgegenhaltungen:
**EP-A- 0 279 391**
**WO-A-81/01542**
**US-A- 2 953 320**
**US-A- 3 034 747**
**US-A- 3 489 374**

(73) Patentinhaber: **BUCHELT, Benno, Dipl.-Ing.**
**Zellerstrasse 16**
**A-9063 Maria Saal(AT)**

(72) Erfinder: **BUCHELT, Benno, Dipl.-Ing.**
**Zellerstrasse 16**
**A-9063 Maria Saal(AT)**

(74) Vertreter: **Gudel, Diether, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Grosse Eschenheimer Strasse 39**
**D-60313 Frankfurt (DE)**

**Beschreibung**

Die Erfindung bezieht sich auf ein Hubtriebwerk nach dem Oberbegriff von Anspruch 1.

Ein derartiges Hubtriebwerk ist in der US-A-3,489,374 beschrieben.

Traditionelle Konstruktionen dieser Kategorie von Hubtriebwerken, wie sie zum Beispiel in der erwähnten US-A angeführt sind, haben gegenüber der nachfolgend beschriebenen Erfindung den Nachteil, daß in ihrer Schubkräftebilanz der Anteil des Unterdruckkraftschubes an der Oberseite des wulstartigen Einlaufes sehr gering ist. Der Schub traditioneller Hubtriebwerke konzentriert sich saug-und druckseitig um den engeren Bereich des Axialgebläse-Durchmessers. Eine auch in der hochrangigen Fachliteratur fehlerhaft interpretierte Kräftebilanz des Schubes von Triebwerken allgemein, auf die nachfolgend kurz eingegangen wird, verhinderte bisher regelrecht, daß dem Schubanteil des Unterdruckes über dem Einlaufwulst genügend Aufmerksamkeit geschenkt wird. Die Folge davon ist ein relativ kleines Verhältnis von Auftrieb F zur Maschinenleistung P, kurz F/P genannt und damit ein höherer spezifischer Kraftstoffverbrauch im Schwebeflug.

Demgegenüber liegt der Erfindung die Aufgabe zugrunde, bei Vermeidung der Nachteile des Standes der Technik insbesondere eine Erhöhung des Unterdruckschubanteiles des Einlaufwulstes bei einem derartigen Triebwerk zu erreichen.

Zur Lösung dieser Aufgabe sind die kennzeichnenden Merkmale von Patentanspruch 1 vorgesehen.

Wesentlich für die Erfindung ist somit die Miteinbeziehung der Verwindungsgeometrie des Axialgebläses bei der Gestaltung der Meridiankontur.

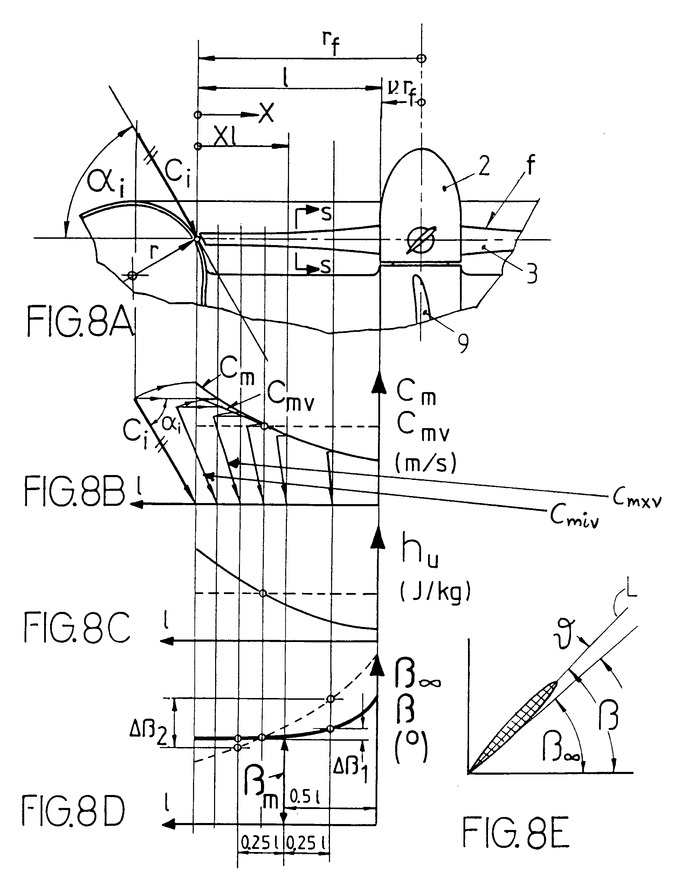

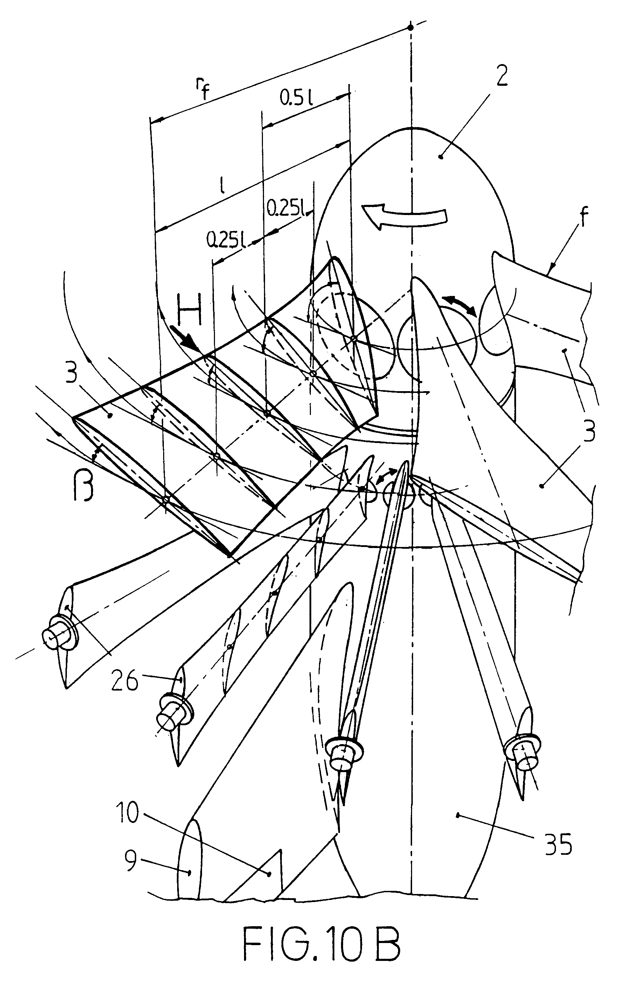

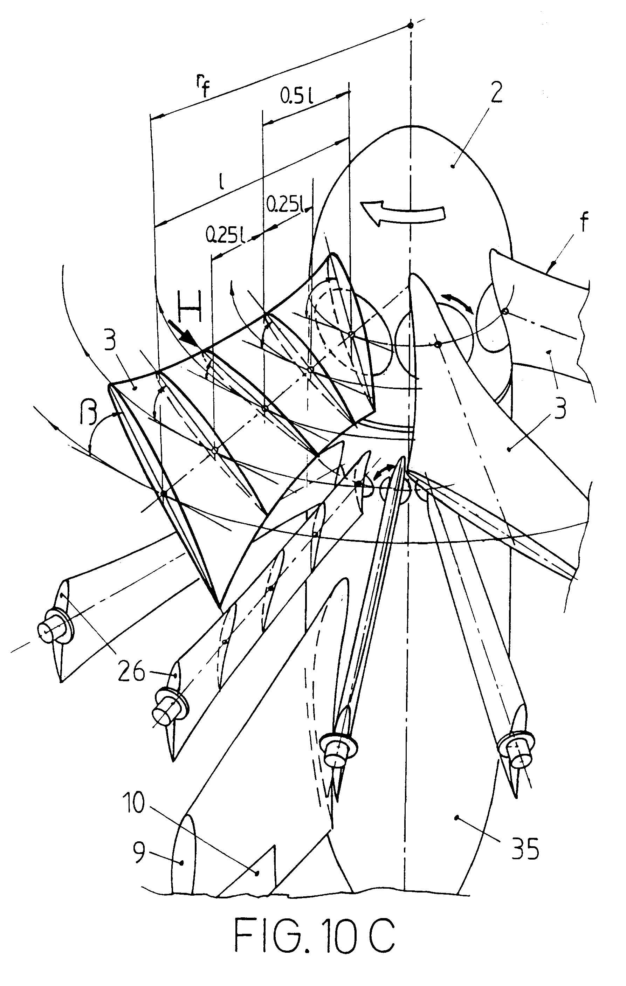

Dies äußert sich gemäß Anspruch 3 in einer radialen Zunahme oder auch Konstantbleiben des Anstellwinkels $\beta$ der Profilsehne gegenüber der Umfangsdrehrichtung der Profile der Blätter des Akialgebläses von einem radialen Mittelbereich ausgehend, der mit der Bezeichnung $l$ für die radiale Blattlänge zwischen Nabenradius und Außenradius des Axialgebläses der Definition ± 0.25$l$ um die radiale Blattmitte 0.5$l$ entspricht. Die Zunahme von $\beta$ nach radial außen von dem laut Anspruch 3 so definierten radialen Mittelbereich wird in den FIGUREN 9D und 10C anschaulich dargestellt, das annähernde Konstantbleiben in den FIGUREN 8D und 10B.

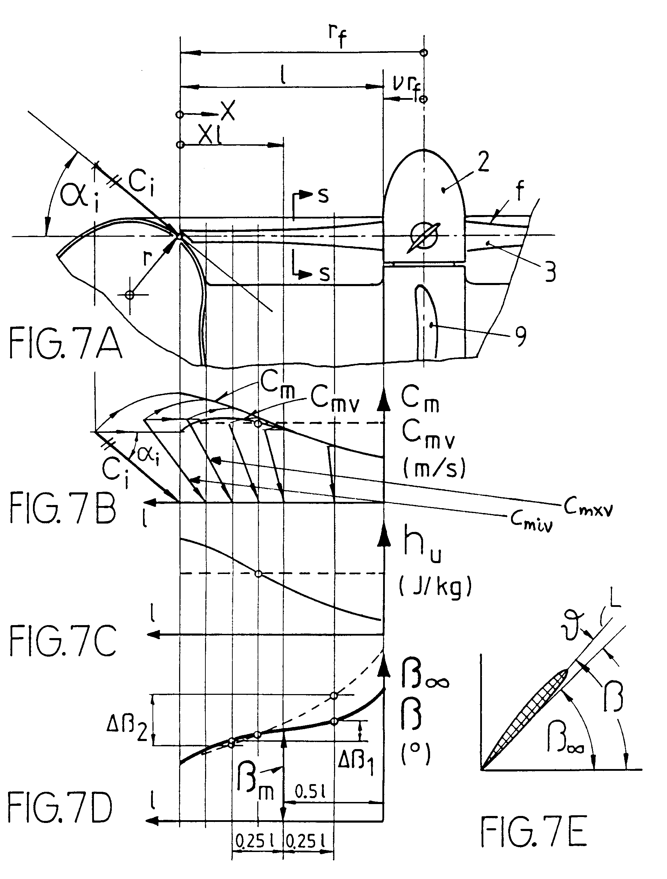

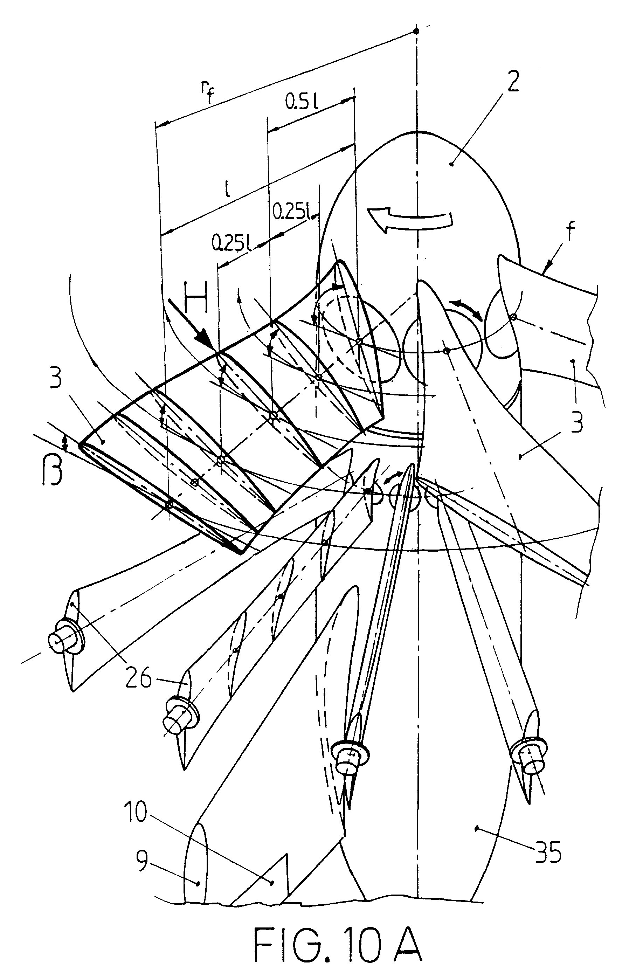

Das allgemeinste Merkmal für alle Varianten der Erfindung ist eine besonders geringe Verwindung der Gebläseschaufeln im Mittelbereich ± 0.25$l$ beiderseits um 0.5$l$, wie dies im Anspruch 1 in Verbindung mit den FIGUREN 7D, 8D und 9D definiert ist, wozu auch die Perspektive- Zeichnungen FIGUREN 10A, 10B und 10C als Illustration dienen. Dieser Anspruch 1 schließt auch den Fall mit ein, daß der Anstellwinkel $\beta$ der Schaufelblätter nach der typischen, auf alle Varianten zutreffenden besonders geringen Verwindung im radialen Mittelbereich der Blattlänge, nach außen, im radial äußersten Bereich, wieder stärker abnimmt. Dies wird durch das Diagramm FIG. 7D und durch die Perspektive -Darstellung FIG. 10A illustriert.

Die so beschriebene erfindungsgemäße Geometrie der Verwindung der Schaufelblätter bewirkt in allen drei typischen Varianten ( FIGUREN 10A, 10B, 10C ) gemäß nach Anspruch 1 eine radiale Zunahme der Differenz der Totaldrücke zwischen Saug- und und Druckseite des Axialgebläses, wozu auch die Proportionsparameter der Meridiankontur, wie der Tangentenwinkel $\alpha_i$ gegenüber der Rotorblattspitze des Axialgebläses und der Verlauf des Krümmungsradius r des Einlaufwulstes in Zusammenhang mit dem Gebläseaußenradius $r_f$ und dem Gebläsenabenradius $\nu$ $r_f$ beitragen. Die Differenz der totalen Drücke zwischen Saug- und Druckseite ist proportional der spezifischen Energiezufuhr $h_u$ pro kg durchgesetzter Luft auf einem bestimmten Radius ( $h_u$-Dimension Nm/kg oder J/kg ). Den radialen Verlauf für $h_u$ für die drei eingangs erwähnten drei typischen Varianten zeigen die FIGUREN 7C, 8C und 9C, wobei die strichlierte konstante Funktion zum Vergleich die Auslegung traditioneller Gebläse zeigt, die meist nach der sogenannten "Wirbelflußtheorie" entworfen sind. Man erkennt den erheblichen Unterschied der erfindungsgemäßen Auslegephilosophie gegenüber der traditionellen. Es gibt noch die weit verbreitete Auslegung " Reaktionsgrad konstant über dem Radius ". Nach dieser letzteren in der Fachliteratur bekannten Auslegung müßte die Meridiangeschwindigkeit $c_m$ über dem Radius eher abnehmen. Nach der bekannten, mit der Potentialtheorie zylindrischer Anströmung in Verbindung stehenden "Wirbelflußtheorie" ist die Meridiangeschwindigkeit $c_m$ über dem Radius konstant. Bei der erfindungsgemäßen Auslegung hingegen nimmt die Meridiangeschwindigkeit in markanter Abweichung zu traditionellen Entwürfen von der Nabe des Gebläserotors bis zur Blattspitze um das 1.3 bis 3 fache zu, manchmal mit Wendepunkten ( FIG. 7B ), wie die FIGUREN 7B, 8B und 9B zeigen. Niemals aber bleibt die Meridiangeschwindigkeit konstant über dem Radius oder nimmt etwa gar ab, wie dies annähernd bei traditionellen Entwürfen der Fall ist.

Alle in den FIGUREN dargestellte Funktionen sind maßstäblich und entsprechen berechneten Beispielen, deren Zahlenwerte auch in den Ansprüchen 13, 14, 15, 17 und 18 als Tabellen aufscheinen, während der dazugehörige Formelapparat, der vom Erfinder hergeleitet wurde, als typische Formelstruktur zum Zwecke der Berechnung der erfindungsgemäßen Zahlenwerte in den Ansprüchen 11, 12 und 16 aufscheint.

Das erfindungsgemäße Hubtriebwerk gehört im Gegensatz zu den "Freipropellern" zur Gattung "ummantelte Triebwerke". Bei Freipropellern ( Helikopter ) trifft man aus anderen Gründen als bei der erfindungsgemäßen Ausführung eine Nullverwindung im radial äußeren Bereich sehr häufig an, bei ummantelten Triebwerken hingegen nur in der Variante nach den FIGUREN 8D und 10B der erfindungsgemäßen Ausführungen.

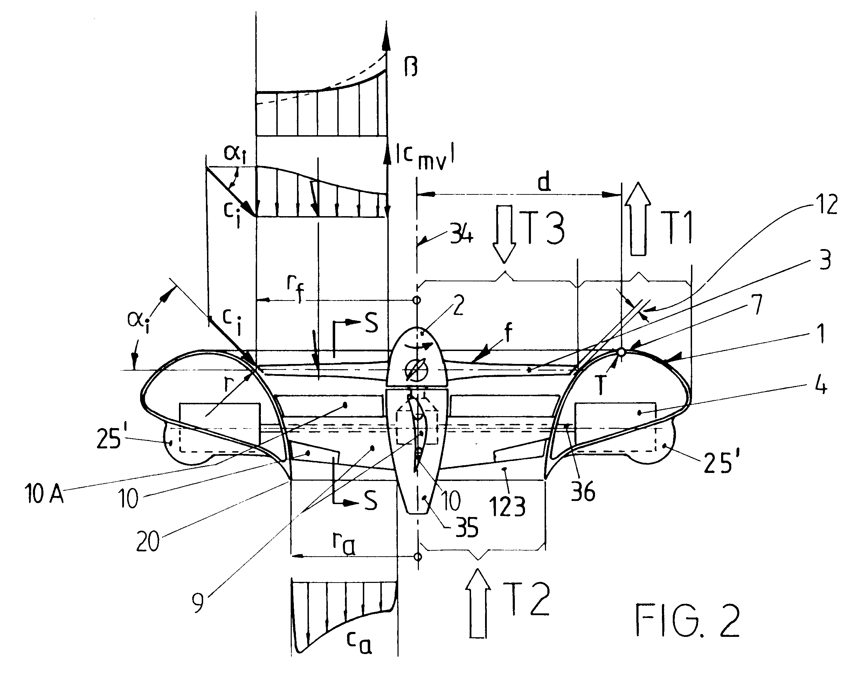

Ein weiterer Vorteil des erfindungsgemäßen Hubtriebwerkes neben der schon erwähnten maximalen Vergrößerung der Unterdruckkraft-Schubkomponente T1, die auf die projiozierte Wulst-Kreisringfläche außerhalb des Gebläseradius ( = Fanradius ) $r_f$ wirkt und damit zu einem günstigen Verhältnis F/P und in der weiteren Folge zu einem niedrigen Kraftstoffverbrauch im Schwebeflug führt, ist die erhöhte Lagestabilität der Triebwerksachse im Schwebeflug, erzielt durch den großen Angriffsradius d der Kraftkomponente T1. Wenn die Schaufelblätter des Axialgebläserotors wie bei Helikoptern zyklisch und kollektiv zugleich verstellt werden, dann wird damit auch die räumliche Auftriebsverteilung über dem Einlaufwulst 7 auf Radien wesentlich größer als $r_f$ beeinflußt, woraus sich starke Stabilisierungs- und Steuermomente in günstiger Weise ergeben. Die genannten Parameter zeigt FIG. 2 .

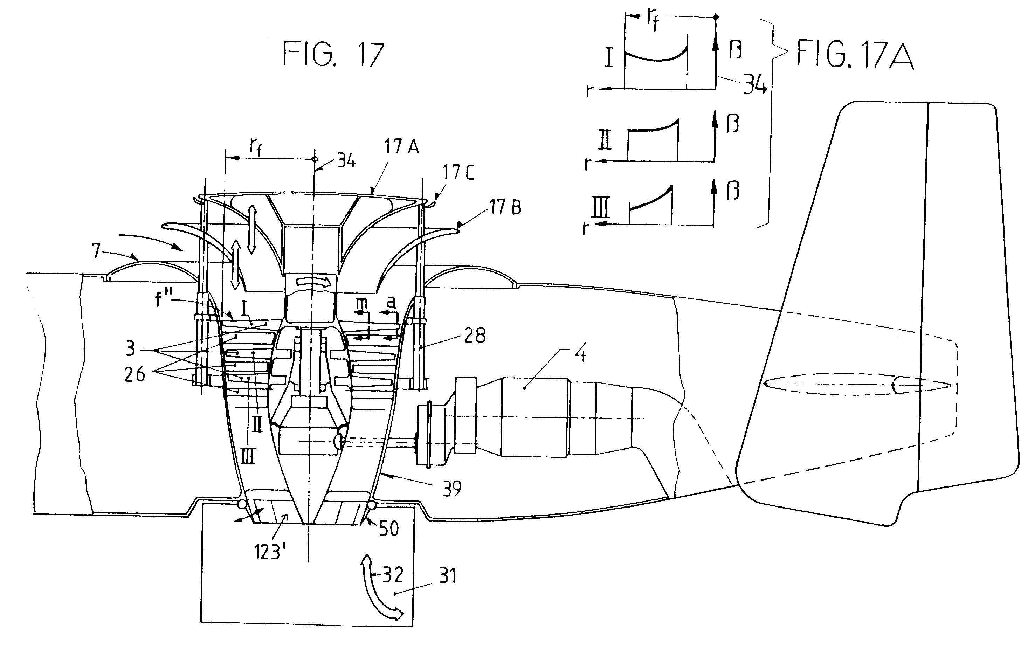

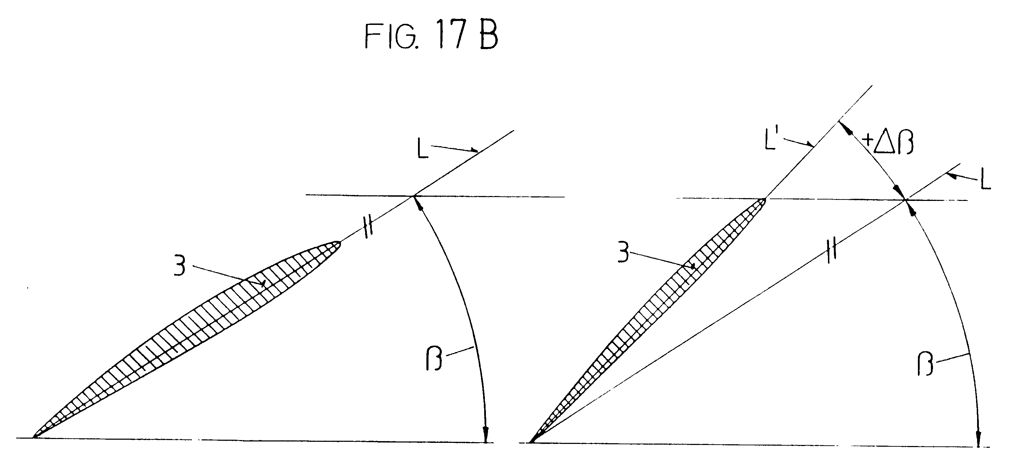

Die erfindungsgemäßen Vorteile werden sich bei einstufigen Axialgebläsen mit geringen Druckverhältnissen am stärksten ausprägen.Jedoch läßt sich die Erfindung auch auf vielstufige Axialgebläse und auf vielstufige Kompressoren von Hubtriebwerksgasturbinen anwenden. Diese Möglichkeit wird in Anspruch 4 festgehalten. Nach Anspruch 4 hat die erste Stufe des Kompressors die am stärksten ausgeprägten erfindungsgemäßen Merkmale und die dazu passende Meridiankontur des Einlaufes, das heißt den stark gekrümmten Einlaufwulst nach FIG. 17, bei Bedarf auch Einlauf-oder Umlenkschilder 17B und 17C. Die Diagramme über den radialen Verlauf des Anstellwinkels $\beta$ der Profilsehne bei beispielsweise 3 aufeinander folgenden Axialstufen I, II und III zeigt FIG. 17A : I zeigt den typischen erfindungsgemäßen Verlauf für das stark gekrümmte Meridianstromlinienbild des erfindungsgemäßen Einlaufes, II einen typischen Übergang und III die traditionelle Auslegung für mehr zylindrische Anströmung der Stufe, mit der stetigen Abnahme von $\beta$ von der Nabe nach radial außen. Anspruch 4 nimmt Bezug auf FIG. 17A.

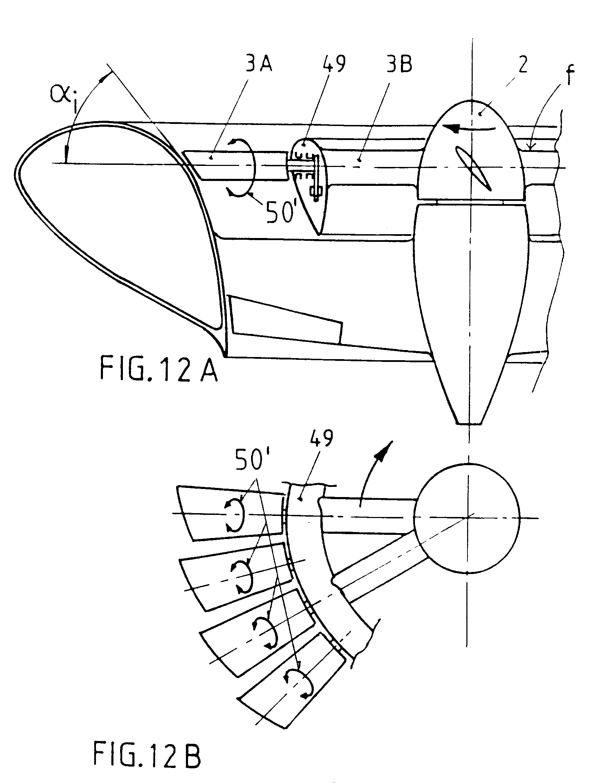

Anspruch 9 beschreibt in Verbindung mit den FIGUREN 12A und 12B die Möglichkeit der radialen Unterteilung der erfindungsgemäßen Schaufeln, damit radial außen zur Erhöhung der Rotationssymmetrie der Einlaufströmung mehr Schaufeln außen als innen angeordnet werden können, wobei dies auch dem erfindungsgemäßen Merkmal der radial außen hohen Energiezufuhr $h_u$ in J/ kg Luft entgegenkommt.

Bevor auf die Figuren und Diagramme ausführlich eingegangen wird, soll kurz der der Erfindung zugrunde liegende theoretische Hintergrund erwähnt werden.

Eine ausführliche Schilderung des Hintergrundes enthält die österreichische Anmeldung A-1169/88, eingereicht am 5. Mai 1988, sowie das US-A Patent 5,035,377 , eingereicht am 20. September 1988.

Es handelt sich nach Ansicht des Erfinders um die notwendige Korrektur von sechs miteinander zusammenhängenden schweren Mängeln in der Fachliteratur einschließlich solcher von Triebwerksfirmen, betreffend die Kräftebilanz des Schwebefluges von Hubtriebwerken und auch jene von Triebwerken für den Horizontalflug in der Startphase. Ohne Einsicht der Notwendigkeit der Korrektur dieser Mängel können der theoretische Hintergrund der Erfindung und die Beweggründe der Erfindung nicht begriffen werden.

**Mangel Nr. 1 :**

Mit der in der Literatur weit verbreiteten vereinfachten Schubformel $F = m_s (c_a - c_0 )$ mit $F$ als Schub, $m_s$ als zeitlicher Massefluß, $c_a$ als Auslaßgeschwindigkeit des fertig zylindrisch ausgebildeten Auslaßstrahles und $c_0$ als Fluggeschwindigkeit, werden bereits unzulässige Anleihen an eine unrealistische Reibungsfreiheit voraussetzende Potentialtheorie gemacht, mit unendlich weit vor und hinter dem Triebwerk liegenden Kontrollflächen. Dies führt zum Trugschluß, daß im Falle des Standschubes oder Schwebefluges der Schub sich allein aus der Auslaßimpulskraft $F = m_s c_a$ ergebe, weil - vertieftes Verständnis der Potentialtheorie vorausgesetzt, das in der kritisierten Fachliteratur sehr selten vorkommt - bei nahe zum Triebwerk gezogener Kontrollfläche zum Zweck der Anwendung der Kräftebilanz, sich die Kräfte im Einlauf und am Mantel bei ummantelten Triebwerken ( Wulst ) aufheben müßten.

In der wirklichen, reibungsbehafteten Strömung heben sich diese Kräfte im Einlauf überhaupt nicht auf, sondern müssen einzeln erfaßt und berücksichtigt werden.

Die Nichtberücksichtigung dieser Kräfte -

T3'     die bremsende, Abtrieb erzeugende Einlaufimpulskraft über der Gebläserotorfläche,

T3''    die schubunterstützende Unterdruckkraft über der Rotorfläche, welche die Einlaufimpulskraft T3' je nach Richtungslage der Einlaufstromlinien zur Hälfte oder mehr ( bei der erfindungsgemäßen Ausführung ) aufhebt bis zur Resultierenden T3 = T3' - T3''

T1      die Mantelkraft oder Wulstkraft außerhalb des Gebläserotorradius $r_f$ , die als Unterdruckkraft schubunterstützend wirkt und um deren größtmögliche Entwicklung es bei der vorliegenden Erfindung geht und die sich bei reibungsbehafteter Strömung keineswegs selbsttätig einstellt, wie bei dem akademischen Beispiel des unendlich dünnen, zylindrischen, scharfkantigen Mantelrohres in einer Potentialeinlaufströmung -

das ist der Mangel Nr. 1.

**Der Mangel Nr. 2**

besteht in der Nichtberücksichtigung der realistischen Kräftebilanz in der von der Literatur her bekannten Beziehung für das Verhältnis von Auftrieb F zu Maschinenleistung P ,

$$\frac{F}{P} \;=\; \eta\,\frac{2}{c_a}\;,$$

mit $\eta$ als unklar definiertem Wirkungsgrad, der, genau genommen, gemäß der abstrakten Potentialtheorie auch für nicht zutreffende Strömungsbilder in der Entfernung unendlich verantwortlich ist. Besser ist die vom Erfinder vorgeschlagene Schreibweise mit

$$\frac{F}{P} \;=\; \eta\,f_G\;\frac{1}{c_a}$$

mit $\eta$ als Gesamtwirkungsgrad innerhalb einer klar definierten, eng um das Triebwerk gezogenen Kontrollfläche und $f_G$ als Einflußfaktor der Meridiangeometrie, die ja sehr unterschiedlich sein kann. Man erkennt dadurch neben der in der Literatur bekannten ( $1\,/\,c_a$ )- Abhängigkeit über $f_G$ auch den Einfluß der Geometrie auf das Verhältnis F/P !

**Der Mangel Nr. 3**

besteht darin, daß die den Einfluß der Hubtriebwerksgeometrie versteckende aber weit verbreitete Beziehung

$$\frac{F}{P} \;=\; \eta\,\frac{2}{c_a}$$

einfach auf die unterschiedlichsten Hubtriebwerksgeometrien angewandt wird, wodurch zum Beispiel im Falle zylindrisch ummantelter Axialgebläse bis zu 100 % fälschlich zu hohe Hubkrafterwartungen erweckt werden, womit man die Enttäuschung über mangelnde Hubkraft bekannter Projekte der fünfziger und sechziger Jahre klären könnte.

**Der Mangel Nr. 4**

besteht darin, daß man wegen der steten Vernachlässigung von T1 in der Fachliteratur übersieht, daß man diese Kraft - von Strömungsverlusten abgesehen - ohne Maschinenmehrleistung als Teil einer theoretischenb Rückgewinnungskraft aktivieren kann.

**Der Mangel Nr. 5**

besteht wegen der in der kritisierten Literatur vernachlässigten Kräfte im Einlauf in der weit verbreiteten falschen Schlußfolgerung, daß bei annähernd zylindrischem Einlauf ein Auslaßdiffusor Leistungsersparnis bringe.

4

**Der Mangel Nr. 6**

besteht im starren Festhalten an der Froude'schen Erkenntnis für die Optimierung von Strahlleistungen, wonach die Auslaßstrahlgeschwindigkeit über dem gesamten Querschnitt konstant sein soll - bei allen Anwendungen-, ohne die Voraussetzungen dieser Herleitung stets neu zu überdenken. Bei den erfindungsgemäßen Konfigurationen würde jedoch dadurch auch der Abtrieb erzeugende Einlaufimpuls im negativen Sinne optimiert. Die erfindungsgemäß nach radial außen stark zunehmende Meridiangeschwindigkeit, eine Verteilung, die sich bis in den Auslaß fortpflanzt ( FIG. 2 ), bringt einen Schubgewinn von etwa 30 % im Einlauf bei Verlusten von nur etwa2 % im Auslaß gegenüber der Froude'schen Optimierung.

Weitere Einzelheiten ergeben sich aus der FIGURENBESCHREIBUNG.

Es zeigen:

| | |
|---|---|
| FIG. 1 | die Anwendung des erfindungsgemäßen Hubtriebwerkes als selbständiges Luftfahrzeug, |
| FIG. 2 | einen typischen Schnitt nach der Meridianebene A-A der FIG. 1, |
| FIG. 3 | eine Variante der FIG. 2 mit Auslaßdiffusor anstelle der Auslaßdüse der FIG. 2, |
| FIG. 4, 4A, 5 und 6 | zeigen Schaufelgittervarianten des typischen Schnittes S-S der FIG. 2. |
| FIG. 7A bis 7E, 8A bis 8E und 9A bis 9E | zeigen typische, von traditionellen Auslegungen stark abweichende Funktionsverläufe der erfindungsgemäßen Konstruktion, insbesondere den Verlauf der Verwindung der Gebläseschaufeln. |
| FIG. 10A, 10B und 10C | zeigen Perspektive- Darstellungen der erfindungsgemäßen Rotorblattverwindungen als Illustration zu den Figurengruppen 7, 8 und 9. |
| FIG. 7G, 8G und 9G | zeigen typische Ansichten in Blickrichtung H in den FIG. 10A, 10B und 10C. |
| FIG. 7H | zeigt die entsprechende Ansicht eines traditionellen Gebläseblattes. |
| FIG. 11 | zeigt eine Figur, ähnlich FIG. 3 aber mit einlaßseitigem Leitschild. |
| FIG. 12A und 12B | zeigen die Möglichkeit, die Gebläseschaufeln radial zu unterteilen. |
| FIG. 13 | zeigt die perspektivische Ansicht eines als Automobil verwendbaren Schwebegerätes. |
| FIG. 14A | zeigt den typischen Meridianschnitt Z-Z, der in FIG. 13 markiert ist. |
| FIG. 14B | zeigt eine vereinfachte Draufsicht zu FIG. 14A. |
| FIG. 14C | zeigt einen vergrößerten Ausschnitt aus FIG. 14A. |
| FIG. 14G | zeigt den typischen Zylinderschnitt S-S markiert in FIG. 14C. |
| FIG. 14H | illustriert das Diagramm FIG. 14D, den radialen Verwindungsverlauf als Verlauf des Winkels $\beta$ und des zu $\beta$ proportionalen Winkels $\beta_\infty$ in Perspektive. |
| FIG. 15 | zeigt ein erfindungsgemäßes Hubtriebwerk in einer Flugzeugzelle mit Beschleunigungsdüse stromabwärts vom Gebläse. |
| FIG. 16 | zeigt eine Variante zu FIG. 15 mit Auslaßdiffusor stromabwärts vom Gebläse. |
| FIG. 17 | zeigt ein erfindungsgemäßes Hubtriebwerk mit mehrstufigem Axialkompressor, eingebaut in eine Flugzeugzelle. |
| FIG. 17A | zeigt die typischen radialen Verläufe der Blattwinkel $\beta$ bei beispielsweise 3 Kompressorstufen, deren Rotoren in FIG. 17 und 17A mit I, II und III bezeichnet werden. |
| FIG. 17B | zeigt links einen typischen Profilschnitt m-m, markiert auf einem mittleren Radius der ersten Rotorstufe I in FIG. 17, während rechts in FIG. 17B im Vergleich dazu ein typischer |

|  | Außenschnitt a-a des gleichen Blattes dargestellt ist. |
|---|---|
| FIG. 18 | zeigt ein komplexes Beispiel eines Hubtriebwerkes für maximale Treibstoffersparnis. |
| FIG. 18A | zeigt eine Variante von FIG. 18 mit Beschleunigungsdüse stromabwärts vom Gebläse statt eines Diffusors der FIG. 18. |

Figurenbeschreibung im Detail:

FIG. 1

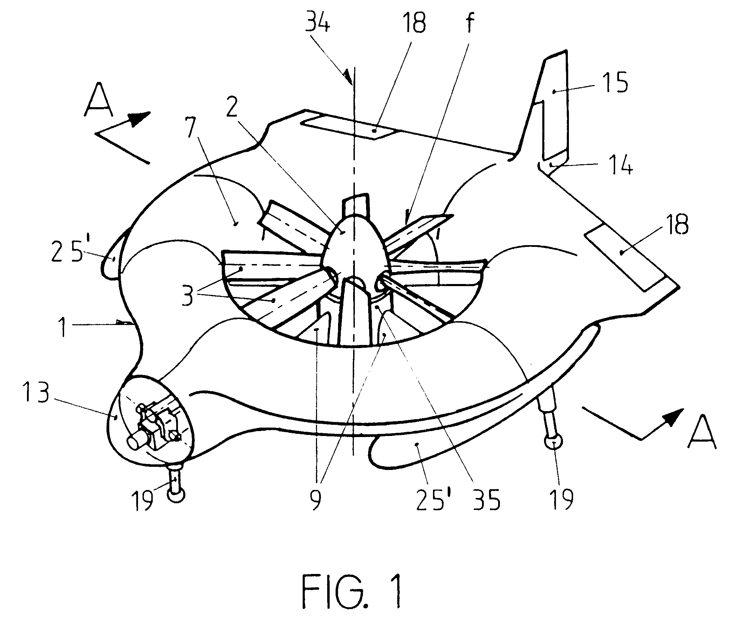

zeigt ein erfindungsgemäßes Hubtriebwerk, das mit geringen Zusatzmerkmalen ein selbständig verwendbares schwebefähiges Luftfahrzeug darstellt. Der an der Oberseite stark ringförmig gewölbte Tragkörper 1 besitz vorne eine in die Horizontalflugrichtung ragende Nase 13, diametral gegenüber hinten einen Schwanz 14 mit Seitenruder 15, kombinierte Quer- und Höhenruder 18, Landebeine 19, Außenbehälter 25' und eine gegenüber der Festnabe 35 drehbare Gebläsenabe 2 mit einer Anzahl verstellbarer Rotorschaufeln 3, die um eine vertikale Achse 34 rotieren und die mit engem Spalt in einen konvex gewölbten Wulst 7 eingebettet sind, der bis zum 1.4 - fachen Gebläseaußenrotorradius rotationssymmetrisch ist. Der Hauptzweck der FIG. 1 besteht darin, aufzuzeigen, daß von der Rotationssymmetrie abweichende Merkmale erst in größerer radialer Entfernung vom Gebläserotoraußenradius aufscheinen. Die Nase 13 des vorzugsweise ferngesteuerten Luftschwebefahrzeuges enthält z.B. eine Fernsehkamera und andere Geräte. Das Axialgebläse ist mit f ( Fan ) bezeichnet.

FIG. 2

stellt den typischen Mittelschnitt A-A dar, der in FIG. 1 markiert ist. Der Einlaufwulst 7 des Tragkörpers 1 führt mit einem vorbestimmten Krümmungsradius r gegenüber dem Außenradius $r_f$ der Gebläserotorblätter 3 und einem Meridiankonturwinkel $\alpha_i$ an dieser Stelle, der zusammen mit r maßgeblich die Verwindung der Rotorblätter 3 beeinflußt , vorbei bis zum Außenradius $r_a$ , wobei ein stetiger Verlauf der Krümmung des Wulstes 7 und das Fehlen geradliniger Meridiankonturstücke wesentlich sind. Die Antriebsmaschinen für das Gebläse f können beliebig angeordnet sein; entweder sind sie in der Nabe 35 oder wie in FIG. 2 gezeigt, als Merkmal 4 im Tragkörper 1 angeordnet und über Radialwellen 36, die durch die Stützrippen 9 hindurchführen, mit der Gebläsenabe 2 über Kegelradgetriebe verbunden.

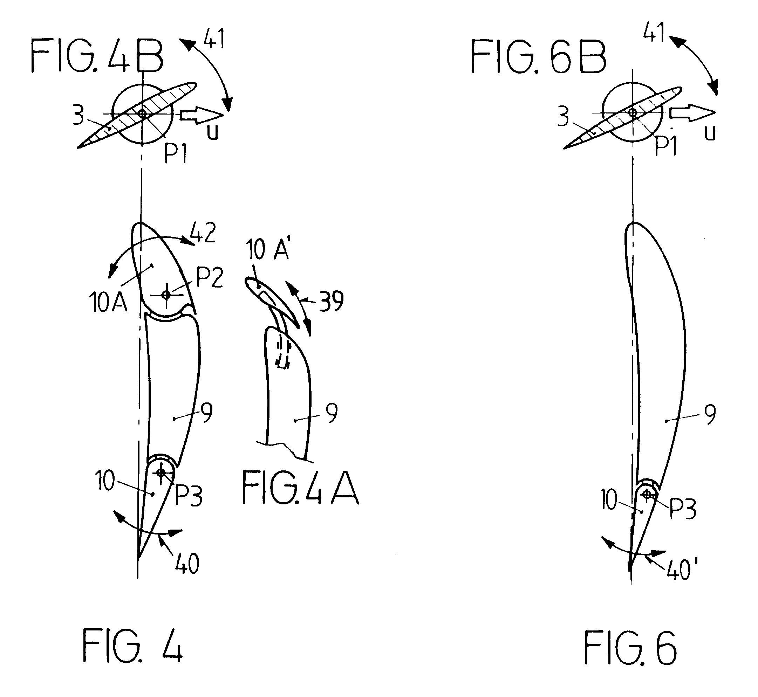

Der in FIG. 2 eingezeichnete Zylinderschnitt S-S wird durch die FIG. 4 repräsentiert, jedoch können Stützrippen, Ruder und fallweise Leitschaufeln des Schnittes S-S der FIG. 2 auch nach FIG. 4A, FIG. 5 oder FIG. 6 gestattet sein, wo nähere Erklärungen über diese Steuerelemente gegeben werden. FIG. 2 zeigt auch eine für das erfindungsgemäße Hubtriebwerk typische Kräftebilanz: Die Unterdruck-Wulstkraft T1 um deren stärkere Entwicklung es bei der Erfindung geht, stellt das Unterdruckintegral auf einer Kreisringfläche dar, die vom Gebläseaußenradius $r_f$ ausgehend im wesentlichen bis zur Außenkontur, genau genommen über die ganze Außenoberfläche des Tragkörpers 1 verläuft. Die Abtrieb erzeugende Negativkraft T3 besteht im wesentlichen aus der Einlaufimpulskraft T3', die über die Saugseite des Gebläses f bis zum Außenradius $r_f$ integriert wird und die Bezeichung T3' hat, vermindert um die Unterdrucksaugkraft T3'' über der Rotorsaugfläche. Es gilt somit $T3 = T3' - T3''$ . Auf die Auslaßfläche mit dem Radius $r_a$ wirkt die Auslaßimpulsschubkraft T2. Der Gesamtschub ergibt sich mit $F = T1 + T2 - T3$ . Das Ziel der erfindungsgemäßen Ausbildung ist die Unterdruckkraft T1 möglichst groß zu machen, da einleitend festgestellt wurde, daß T1 ohne wesentliche Maschinenmehrleistung gewonnen werden kann und anderseits gehört zur Zielsetzung den Rest der Einlaufimpulskraft T3 möglichst klein zu halten. Dies geschieht in einer Anordnung wie in FIG. 2 durch einen relativ flachen Außenmeridian-Tangentenwinkel $\alpha_i$ am Rotoraußenradius $r_f$ des Gebläses. Dadurch verhält sich gemäß den eingangs angeführten Erläuterungen des Erfinders die günstige schubunterstützende Unterdruckkraft T1 zur Abtrieb erzeugenden Einlaufimpulskraft T3' annähernd wie

$$\frac{T1}{T3'} \approx \frac{1}{\sin^2 \alpha_i} \, Konst. \quad ,$$

wodurch man den Vorteil des erfindungsgemäßen Außenmeridiantangentenwinkel $\alpha_i$ deutlich erkennt. Wie schon einleitend unter den sechs aufgezeigten Mängeln der Fachliteratur festgestellt wurde, vernachlässigte man bisher bei Hubtriebwerksberechnungen die Einlaufimpulskraft T3' und die schubunterstützende Wulst-Unterdruckkraft T1. Die FIG. 2 zeigt über der Schnittdarstellung ein Diagramm über den Verlauf des Winkels $\beta$ der Profilsehne gegenüber der Umfangsdrehrichtung, aufgetragen über der Länge der Rotorblätter 3. Die dicke Linie repräsentiert die erfindungsgemäße Gestaltung mit dem markant flachen Verlauf von $\beta$ über der Blattlänge, was in den Ansprüchen 3 und 1 ausgesagt wird. Zum Vergleich zeigt die dünne strichlierte Linie den typischen Verlauf von $\beta$ für traditionelle Auslegungen nach der Wirbelflußtheorie mit dem typischen, stetig von der Nabe nach radial außen stark fallenden Wert von $\beta$.

Das nächste Diagramm darunter zeigt den radialen Verlauf der Vertikalkomponente $c_{mv}$ der Meridiangeschwindigkeit über dem Gebläseradius. Auffalend gegenüber traditionellen Auslegungen, die einen annähernd konstanten verlauf von $c_{mv}$ aufweisen, ist die nach radial außen bis zum Außenradius $r_f$ des Gebläserotors starke Zunahme von $c_{mv}$ bei der erfindungsgemäßen Auslegung, wobei der Wert auf dem Radius $r_f$ etwa 1.4 bis 3 mal so groß sein kann wie der Wert für $c_{mv}$ an der Nabe und der Funktionsverlauf, wie gezeigt, auch einen Wendepunkt haben kann. Die theoretische Begründung für diese starke Abweichung von traditionellen Auslegungen liegt in den anderen Randbedingungen, das heißt im anderen Kräftegleichgewicht auf den stark gekrümmten Stromlinien des erfindungsgemäßen Einlaufes. Daher nimmt auch die spezifische Energiezufuhr $h_u$ ausgedrückt z.B. in J/kg in starker Abweichung von üblichen Auslegungen von der Nabe nach radial außen bis zum Radius $r_f$ bis auf das 10 - fache zu, wie die späteren FIGUREN 7C, 8C und 9C als maßstäbliche Darstellungen der typischen Zahlenwerte und Formeln in den Ansprüchen 11 bis 18 zeigen. Im Diagramm für den radialen Verlauf von $c_{mv}$ in FIG. 2 ist radial außen, an der Stelle $r_f$ auch die größte Meridiangeschwindigkeit $c_i$ als Tangente unter dem Winkel $\alpha_i$ an den Wulst 7 eingezeichnet, deren Vertikalprojektion $c_i \sin \alpha_i$ den maximalen Wert von $c_{mv}$ außen ergibt. Auf diese Art kommen auch alle $c_{mv}$ - Werte auf kleineren Radien zustande.

Die mit der erfindungsgemäßen Auslegung zusammenhängende starke Zunahme der Meridiangeschwindigkeit von der Nabe nach radial außen setzt sich bis in den Auslaßquerschnitt 123 fort, unter welchem die typische radiale Verteilung der Auslaßgeschwindigkeit $c_a$ als Diagramm dargestellt ist.

Man erkennt, daß die nach radial außen zunehmende Meridiangeschwindigkeitsverteilung bis in den Auslaß erhalten bleibt, wo bewußt von der traditionellen Froude'schen Strahloptimierung, wonach die Geschwindigkeit $c_a$ über dem Auslaßquerschnitt konstant sein soll, abgewichen wird, weil die Voraussetzungen hierzu nicht zutreffen, wie eingangs unter "Mangel Nr. 6 der Fachliteratur" erläutert wurde. Erfindungsgemäß ist auch der enge Spalt 12 der Rotorblätter 3 gegenüber dem Wulst 7 mit einem Betrag von weniger als 1/25 des Rotordurchmessers 2 $r_f$.

FIG. 3

zeigt eine Variante der FIG. 2, wobei der Unterschied darin besteht, daß der Strömungskanal stromabwärts vom Gebläse ab einem engsten Radius $r_{k\ min}$ der Meridianaußenkontur des Kanals wieder weiter wird und auf einen größeren Radius $r_a$ im Auslaß führt, so daß ein Auslaßdiffusor zur Verminderung der Auslaßgeschwindigkeit $c_a$ entsteht. Dies hat den Zweck, das Verhältnis F/P allerdings auf Kosten der Leistungsdichte günstiger ( = größer ) zu gestalten. Wesentlich ist aber, daß der Fan f ( Gebläse ) über der engsten Stelle des Kanalmeridian angeordnet ist, so daß wieder der flache Tangentenwinkel $\alpha_i$ entsteht und daß die konvexe Meridiankrümmung mit einem vorbestimmten Verlauf des Krümmungsradius r stetig mit engem Spalt an der Außenkontur des Gebläserotors vorbeigezogen ist und mit stetiger Krümmung in den Auslaßdiffusor 23 direkt übergeht.

Die FIGUREN 4 bis 6

zeigen verschiedene Ausführungsvarianten der inneren Triebwerkssteuerkinematik nach dem typischen Zylinderschnitt S-S, markiert in FIG. 2.

In allen drei Varianten der FIGUREN 4, 5 und 6 sind die Rotorblätter 3 um die Achse P1 drehbar im Sinne des Richtungspfeiles 41 gelagert, damit der Blattwinkel $\beta$ und damit auch $\beta_\infty$ gegenüber der Drehrichtung u in Analogie zu einem Helikopterrotorkopf sowohl zyklisch als auch kollektiv verstellbar ist. Damit wird, wie bei einem Helikopter, die Fluglage eines Gerätes nach FIG. 1 um die Längs- und um die Querachse gesteuert.

Der veränderliche Drall in der Strömung stromabwärts von den Rotorblättern 3, zutreffend auf die FIG. 4, 5, 6, 7E, 8E, 9E und 14G, kann z.B. in der Variante nach FIG. 4 durch automatisch synchron mit den Rotorblättern 3 gekoppelte Ruder 10A, die um die Achse P2 drehbar in Richtung 42 schwenkbar auf den Stützrippen 9 angeordnet sind, ausgeglichen werden, so daß die Momente um die Hochachse des Gerätes nach FIG. 2 und 1 im wesentlichen ausgeglichen sind und die Ruder 10, welche um die Achse P3 die Schwenkbewegung 40 durchführen, primär der Drehlagensteuerung um die Hochachse dienen.

FIG. 4A zeigt eine Alternative zu den Rudern 10A, nämlich ausfahrbare Klappen 10A', welche die Bewegung 39 vollführen.

FIG. 5 stellt eine andere Konstruktionslösung der FIG. 2 im abgewickelten Zylinderschnitt S-S der FIG. 2 dar: Auch der in FIG. 14C markierte Zylinderschnitt S-S und die in den FIG. 15, 16 und 17 markierten Zylinderschnitte m-m werden typisch durch die FIG. 5 repräsentiert.

Der Strömungsdrall, welcher durch die zyklisch und kollektiv verstellbaren Rotorblätter 3 verursacht wird, kann gemäß FIG. 5 durch eine höhere Anzahl von Leitschaufelblättern 26, die um die Achsen P4 mit der Schwenkrichtung 42 drehbar gelagert sind, durch eine automatische Nachfolgesteuerung mit gleichfalls zyklischer und kollektiver Verstellung um P4 kompensiert werden, so daß die Stützrippen 9 im wesentlichen beinahe drallfrei angeströmt werden. Die Drehung der Rotorblätter 3 um die Achse P1 und die Drehung der Leitschaufelblätter 26 um die Achse P4 sind über starre oder variable Übersetzungsgetriebe aufeinander abgestimmt.

Die FIG. 5 zeigt beim Schnitt durch das Rotorblatt 3 auch die maßgebenden Winkel $\beta$, $\beta_\infty$ und $\vartheta$ der Rotorblattgeometrie.

$\beta_\infty$ ist der gemäß bekannter Theorie der Strömungs-Axialmaschinen der Einströmwinkel der ungestörten Schraubenströmung unendlich weit vor und unendlich weit nach dem Schaufelgitter, wenn diese keine Kraft auf die so definierte Strömung ausüben würde. $\vartheta$ ist der zur Kraftausübung auf die Strömung notwendige relative Anstellwinkel gegenüber $\beta_\infty$. Beide Winkel addiert ergeben den Winkel $\beta$ als Winkel der Profilsehne L gegenüber der Umfangsdrehrichtung u. Die Größe von $\beta_\infty$ wird allein von der gewünschten Verteilung der Meridiangeschwindigkeit über dem Radius und somit von der Drehzahl bestimmt. Die Größe von $\vartheta$ berücksichtigt die Profilform, die Rotorblattzahl und die radiale Verteilung der Tiefe ( Breite ) des Rotorblattes. Bei traditionellen Axialgebläsen nimmt $\vartheta$ mit dem Radius von z.B. 4° auf 1° stark ab, hauptsächlich wegen der konstanten spezifischen Energieverteilung $h_u$ in J/kg über dem Radius. Bei der erfindungsgemäßen Auslegung hingegen nimmt $h_u$ über dem Radius nach außen hin stark zu ( vergleiche FIG. 2, 7C, 8C, 9C und 14E ) und daher verhält sich $\vartheta$ zu $\beta_\infty$ über dem Radius annähernd konstant.

Es gilt daher bei der erfindungsgemäßen Auslegung mit dem Index "i" für Zahlenwerte auf dem größten Radius $r_f$ des Gebläses und mit dem Index "x" für Werte im Abstand X von außen, wobei X = 0 eine Stelle auf dem Außenradius $r_f$ bedeutet und X = 1 eine Stelle auf dem Nabenradius ( siehe für diese Definition auch FIG. 7A, 8A und 9A)

$$\frac{\tan \beta_i}{\tan \beta_x} \approx \frac{\tan \beta_{\infty i}}{\tan \beta_{\infty x}} \quad .$$

Somit betreffen Aussagen über $\beta_\infty$ im erfindungsgemäßen Fall auch mit guter Näherung $\beta$.

Daher sind auf den Ordinaten der Diagramme über die typische erfindungsgemäße Verteilung von $\beta_\infty$ über dem Radius auch die Werte von $\beta$ symbolisch verzeichnet, weil deren radiale Verteilung auch so aussehen würde.

FIG. 6 zeigt einbe baulich einfache Ausführung, bei welcher die Ruder 10, die auf den Stützrippen 9 um die Achsen P3 mit der Schwenkbewegung 40' drehbar gelagert sind, eine kombinierte Aufgabe zu übernehmen haben : Die Ruder sollen nicht nur automatisch den durch kollektive und zyklische Verstellung der Rotorblätter 3 veränderlichen Drall durch synchrone geeignete ebensolche kollektive und zyklische Verstellung ausgleichen, sondern überlagert auch die Lagesteuerung des Fluggerätes nach FIG.1 und 2 um die Hochachse bewirken.

Eine grundsätzliche Wölbung des Profiles der starren Stützrippen 9 in allen Varianten der FIGUREN 4, 4A, 5 und 6 trägt ebenfalls nach allgemein bekannten Methoden des Strömungsmaschinenbaues zum Ausgleich des von den Rotorblättern 3 verursachten Dralles und Drehmomentes bei.

Die FIGURENGRUPPE 7 mit den FIG. 7A, 7B, 7C, 7D und 7E

zeigt zusammenhängend eine erfindungsgemäße Auslegung des Hubtriebwerksaxialgebläses f für einen flachen Außenmerididan-Tangentenwinkel $\alpha_i$ von beispielsweise 40° an der Stelle des größten Gebläserotorradius $r_f$ in FIG. 7A.

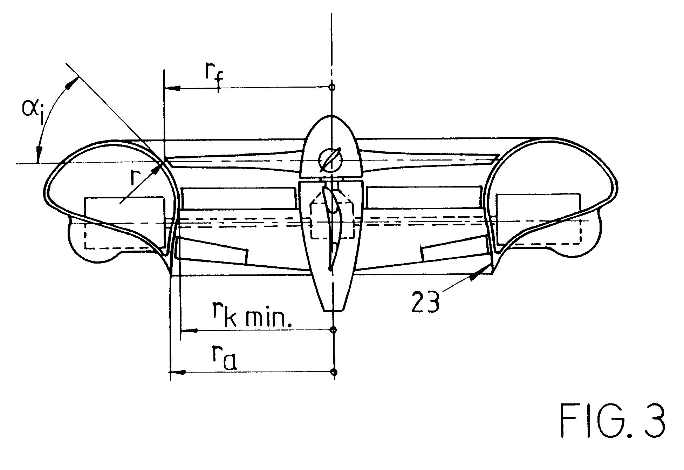

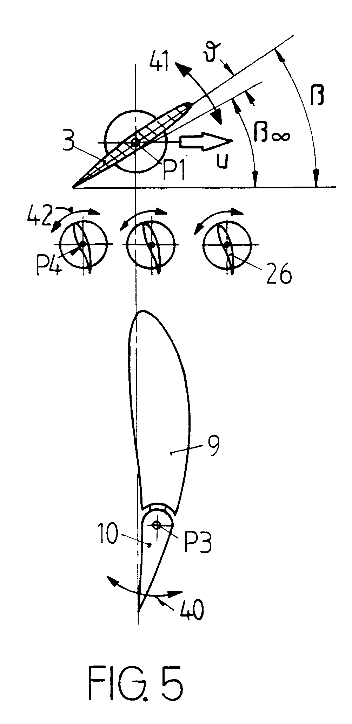

Die FIG. 7A könnt ein Ausschnitt aus FIG. 2 oder FIG. 3 sein. Die Rotorblattlänge wird mit $l$ bezeichnet, der Nabenradius mit $\nu r_f$ , wobei $\nu$ das üblich definierte Nabenverhältnis ist. X ist von außen nach innen gemessen der zwischen "0" und "1" liegende Relativanteil von $l$. Eine bestimmte Entfernung von außen wird durch $Xl$ gemessen. Der Zylinderschnitt S-S in FIG. 7A durch das Rotorblatt 3 des Gebläses f mit der rotierenden Nabe 2,ist in FIG. 7E gegeben, wo für die Parameter $\beta_\infty$, $\beta$, $\vartheta$ und L die entsprechenden Ausführungen zu FIG. 5 gelten. $c_i$ ist die höchste vorkommende Meridiangeschwindigkeit in der Ebene der Drehachsen des Gebläserotors f.Die nachfolgenden Diagramme FIG. 7B,7C und 7D sind graphisch maßstäbliche Darstellungen der typischen zahlenwerte in Anspruch 13, die wiederum auf den formelmäßigen Formulierungen nach Anspruch 11 und 12 für das Kräftegleichgewicht auf den gekrümmten Einlaufstromlinien beruhen.

FIG. 7B zeigt die wirkliche berechnete Lage der Meridiangeschwindigkeiten $c_m$ als schräg geneigte Tangenten an die Meridianstromlinien, an Stellen, wo diese die Drehachsen der Rotorblätter 3 schneiden. Die mit angedeuteter Kreisdrehung in die senkrechte Lage gekippten Beträge von $c_m$ ergeben den Verlauf der Absolutbeträge von $c_m$ über dem Radius. Der Größtwert von $c_m$ ganz radial außen beträgt die Bezeichnung $c_i$ . Die Vertikalprojektion von $c_i$ und allen $c_m$ ergibt den radialen Verlauf eben der Vertikalprojektion $c_{mv}$ , bei einem so flachen Winkel von $\alpha_i$ , wie den beispielsweise in der FIG. 7A gezeigten 40 ° , die nach anfänglichem Anstieg nach radial außen, ganz außen sogar wieder etwas fallen kann, wie FIG. 7B zeigt. Zum Vergleich für die starke Abweichung des erfindungsgemäßen Entwurfes von traditionellen Auslegungen ist in FIG. 7B strichliert der meist konstante $c_m$ - Verlauf traditioneller Auslegungen eingetragen, der theoretisch nur für eine zylindrische Ummantelung des Gebläses zu Recht bestehen würde.

FIG. 7C zeigt den radial stark nach außen zunehmenden Verlauf der spezifischen Energie $h_u$ , die pro kg durchgesetzter Luft dem Gebläse zugeführt wird, wobei diese Funktion bei Gebläsen mit geringer Drucksteigerung etwa $c_m^2$ entspricht. Die strichlierte Linie in FIG. 7C wiederum zeigt zum Vergleich die meist konstant verlaufende spezifische Energie $h_u$ über dem Radius bei traditionellen Entwürfen und macht damit die Abweichung der erfindungsgemäßen Auslegung sichtbar.

Wesentlich in der Figurengruppe 7 ist die FIG. 7D für den Verlauf der Winkel $\beta_\infty$ ( annähernd auch proportional zu $\beta$ ) über dem Gebläseradius oder gleichbedeutend über der Blattlänge $l$ . So wie FIG. 7B die Darstellung der typischen Zahlenwerte der vorletzten Zeile der Tabelle von Anspruch 13 repräsentiert, so stellt die Funktion mit der dicken Vollinie in FIG. 7D den Verlauf der Zahlenwerte in der letzten Zeile der Zahlentabelle von Anspruch 13 dar. Die FIG. 7D stützt das allgemeine Merkmal des Anspruches 1, wonach, wie in FIG. 7D gezeigt, in einem Mittelbereich von ± $0.25l$ um die halbe Blattlänge $0.5l$ die Änderung $\Delta\beta_1$ des Wertes von $\beta$ in Relation zum Mittenwert von $\beta$ , bezeichnet als $\beta_m$ und definiert auf dem Radius, wo $0.5l$ abschneidet, wesentlich geringer ist, als die analoge Änderung $\Delta\beta_2$ des strichliert eingetragenen $\beta$ - Verlaufes einer typischen traditionellen Auslegung, definiert auf dem gleichen Mittelbereich.

Anspruch 1 drückt diesen Sachverhalt reziprok aus, nämlich als erfindungsgemäßes besonders großes Verhältnis vom Mittenwert $\beta_m$ zur Änderung $\Delta\beta_1$ .

Dieser flache Verlauf der Winkel $\beta$ - bezw. $\beta_\infty$ - im Mittelbereich ± $0.25l$ um $0.5l$ ist das typische erfindungsgemäße gemeinsame Merkmal, nicht nur in der Figurengruppe 7, sondern auch in den Figurengruppen 8 und 9, das in Anspruch 1 festgehalten wird. Dabei kann in FIG. 7D der Winkel $\beta$ im radialen Außenbereich wieder fallen, eine Folge besonders flacher Winkel $\alpha_i$ des Außenmeridians des Strömungskanals.

Die FIGURENGRUPPE 8 mit den FIG. 8A, 8B, 8C, 8D und 8E

zeigt die erfindungsgemäße Auslegung des Gebläserotors für einen steilen Meridian-Tangentenwinkel $\alpha_i$ von beispielsweise 60 ° , wozu die Zahlenwerte der Tabelle in Anspruch 14, gestützt auf die Formelstrukturen in den Ansprüchen 11 und 12 den konkreten Hintergrund der in der Figurengruppe 8 gezeigten Diagramme darstellen. Für die in den FIG. 8A und FIG. 8E eingetragenen Parameter gilt die gleiche Beschreibung wie zu den bereits erläuterten analogen Figuren 7A und 7E .
Eine Abweichung gibt es bei den FIG. 8B, 8C und 8D .

Der Verlauf der senkrecht hochgedrehten Beträge der Meridiangeschwindigkeit $c_m$ , deren Größtwert mit $c_i$ bezeichnet wird, nimmt nun von der Nabe nach radial außen noch steiler zu, es gibt keinen Wendepukt mehr, wie in FIG. 7B. Auch die Vertikalprojektion $c_{mv}$ , deren Beträge senkrecht auf der Rotorfläche eine leichte Bestimmung des Luftdurchsatzes ermöglichen, nehmen stetig zu, ohne Wendepunkt. Die schräg geneigten $c_m$ - Vektoren sind zugleich die nach den vom Erfinder hergeleiteten Gleichungen der Ansprüche 11 und 12 berechneten Tangenten an die Meridianstromlinien, wenn sie die von den Rotorblätter-Drehachsen gebildete Ebene durchschneiden. Strichliert, als konstante Funktion in FIG. 8, wird der bei traditionellen Auslegungen zugrunde gelegte Verlauf von $c_m$ gezeigt, der theoretisch nur für den Fall einer annähernd zylindrischen Ummantelung gerechtfertigt ist. FIG. 8C zeigt den mit größerem Winkel $\alpha_i$ nunmehr noch stärker nach radial außen ansteigenden erfindungsgemäßen Verlauf der spezifischen Energie $h_u$ , die vom Gebläserotor pro kg durchgesetzter Luft zugeführt wird und strichliert den meist annähernd konstanten Verlauf bekannter traditioneller Auslegungen zum Vergleich.

Wesentlich zur Stützung der Ansprüche 3 und 1 ist die FIG. 8D, welche die geplotteten Zahlenwerte der letzten Zeile der Tabelle in Anspruch 14 darsstellt. Die gemäß FIG. 8E definierten Winkel $\beta$ und $\beta_\infty$ weisen radial außen einen annähernd konstanten Verlauf auf, der insgesamt über der ganzen Blattlänge $l$ wesentlich flacher ist, als der zum Vergleich eingetragene strichlierte Verlauf von $\beta$ und $\beta_\infty$ traditioneller Auslegungen. Die Änderung $\Delta\beta_1$ des Profilsehnenwinkels $\beta$ im Bereich ± 0.25$l$ beiderseits der Mitte 0.5$l$ im Verhältnis zum Mittenwert $\beta_m$ an der Stelle 0.5$l$ ist bei der erfindungsgemäen Ausführung wesentlich geringer als der Wert $\Delta\beta_2$ , definiert über denselben Mittenbereich, wie FIG. 8D deutlich zeigt. Die Verwindung des erfindungsgemäßen Rotors ist nicht nur im Mittelbereich wesentlich geringer, sondern auch über dem gesamten Bereich $l$.

Anspruch 1 drückt die geringe Verwindung der erfindungsgemäßen Rotorblattkonstruktion als besonders großes Verhältnis des Mittenwertes $\beta_m$ zur Änderung $\Delta\beta_1$ im definierten Mittelbereich ± 0.25$l$ beiderseits von 0.5$l$ aus und bezieht sich dabei auf die FIGUREN 7D, 8D, 9D und 14d .

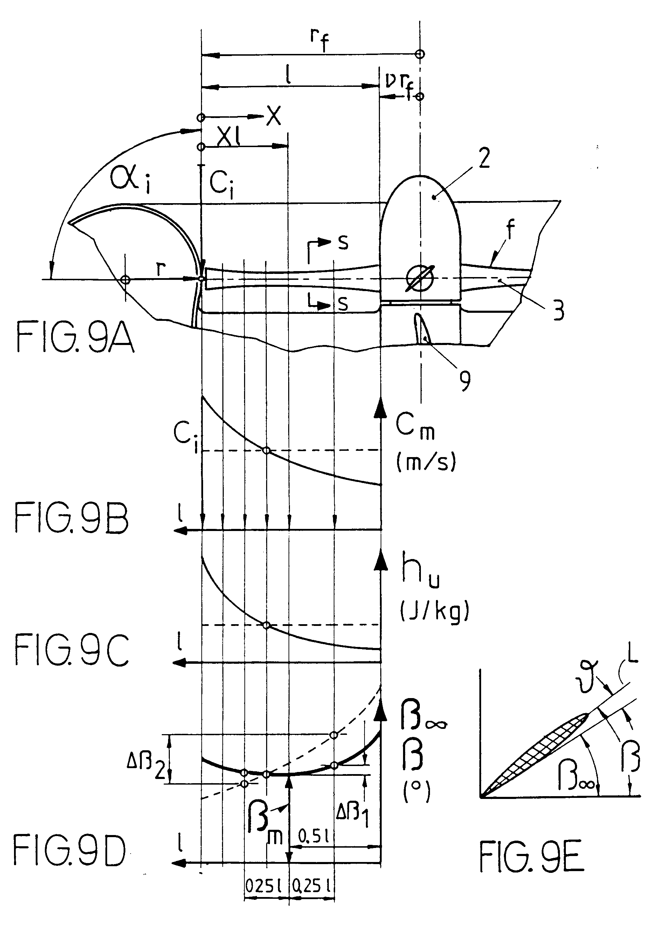

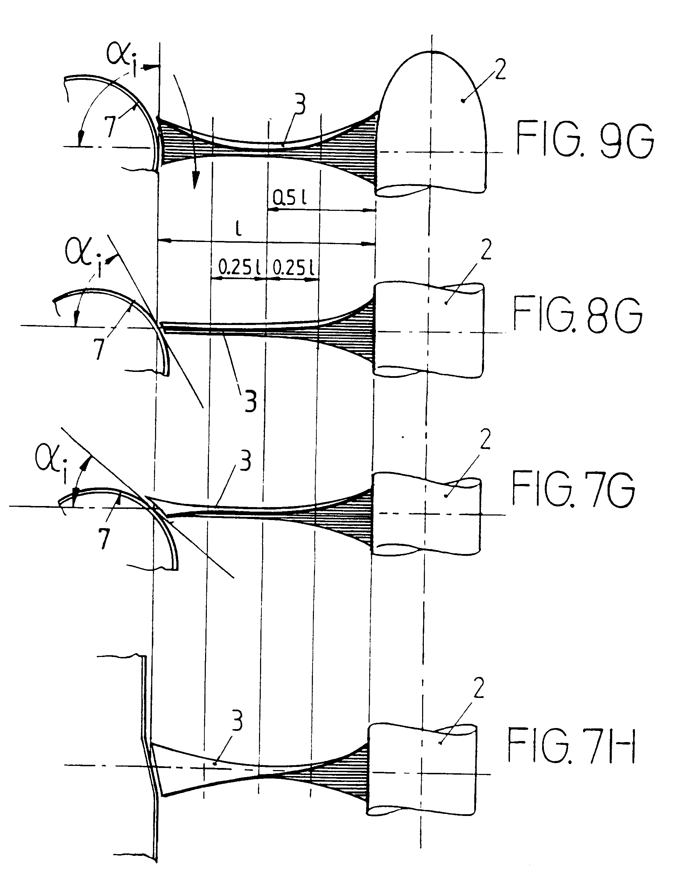

Die FIGURENGRUPPE 9 mit den FIG. 9A, 9B, 9C, 9D, 9E und 9G

zeigt die Auswirkung einer Einbettung des Gebläserotors f so tief in den Einlaufwulst, daß der Tangentenwinkel $\alpha_i$ gegenüber der Rotorblattspitze 90° beträgt. Mit den gleichen Parametern in den FIG. 9A und dem in FIG. 9A eingetragenen typischen Zylinderschnitt S-S, dargestellt in FIG. 9E, wie unter der Figurengruppe 7 bereits erläutert wurdde, erkennt man eine besonders starke Zunahme der nun annähernd senkrecht stehenden Meridiangeschwindigkeits-Vektoren $c_m$ entlang der Rotorblatt-Drehachsen von der Nabe nach radial außen, dargestellt in FIG. 9B. Damit parallel geht gemäß FIG. 9C auch eine besonders starke adiale Zunahme der spezifischen Energie $h_u$ , die annähernd proportional zu $c_m^2$ ist, eine Näherung, die für die in Frage kommenden niedrigen Druckverhältnisse des erfindungsgemäßen Gebläses in der einstufigen Ausführung gut zutrifft.

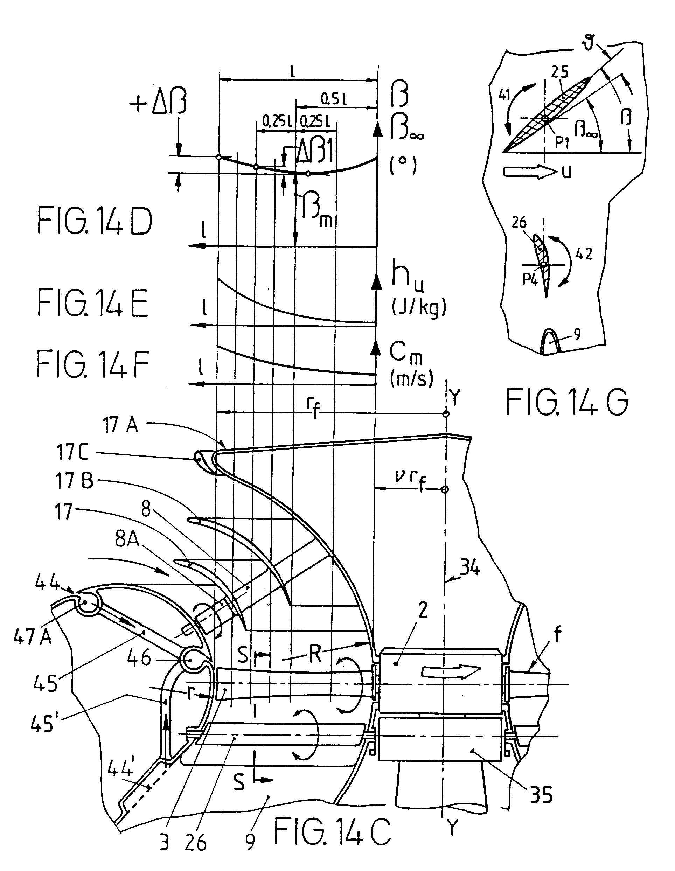

Der Verlauf von $h_u$ über dem Radius ist bei niedrigen Druckverhältnissen auch annähernd proportional der Differenz der totalen Drücke zwischen Saug-und Druckseite des Gebläserotors, so daß nicht nur die FIG. 9C und auch die vorhergehenden FIG. 8C und 7C und die nachfolgende FIG. 14E den radialen Verlauf von $h_u$ allein repräsentieren, sondern auch gleichzeitig Diagramme darstellen, die der Differenz der totalen Drücke proportional sind. FIG. 9D zeigt den Verlauf von $\beta$ und $\beta_\infty$ über dem Radius und damit gleichzeitig über der Blattlänge $l$. Neben dem besonders flachen Mittelstück der Funktion mit der kleinen Anderung von $\Delta\beta_1$ im Bereich ± 0.25$l$ beiderseits von 0.5$l$ und dem in Anspruch 1 ausgedrückten Verhältnis von $\beta_m$ zu $\Delta\beta_1$ , kommt es in diesem Fall radial außen zu einem Wiederanstieg von $\beta$ , weit abweichend von der strichliert eingetragenen traditionellen Auslegung mit dem stetigen Abfall von $\beta$ und $\beta_\infty$ von der Nahe nach radial außen und mit der großen Verwindung $\Delta\beta_2$ im Mittelstück von $l$ . Dieser Wiederanstieg von $\beta$ und $\beta_\infty$ radial außen bei sehr großen Winkeln $\alpha_i$ wird in Anspruch 3 zum Ausdruck gebracht.

FIG. 10A ( ergänzt durch FIG. 7G )

stellt die Perspektive- Illustration zur wesentlichen Aussage der Figurengruppe 7 über die Verwindung des Rotorblattes bei flachen Meridiankoturwinkeln $\alpha_i$ zwischen 30° und 50° dar. Man erkennt den zunächst starken Abfall der Profilsehnenwinkel $\beta$ von der Nahe weg, den flachen Verlauf mit geringer Verwindung im Mittelstück 0.5$l$ ± 0.25$l$ und den wieder stärker werdenden Abfall radial ganz außen.

Die nachfolgenden Leitschaufeln 26 zeigen steiler und annähernd spiegelbildlich einen ähnlichen Profilverlauf und entsprechen der bereits erläuterten Anordnung nach FIG. 5. Bei Ansicht in Blickrichtung H , das ist die Richtung der Profilsehne des Mittenprofils in FIG. 10A, bietet sich dem Betrachter ein Anblick gemäß FIG. 7G, wobei die Blattunterseite dunkel und die Blattoberseite weiß dargestellt ist.

FIG. 10B ( ergänzt durch FIG. 8G )

zeigt die Perspektive- Illustration zur wesentlichen Aussage der Figurengruppe 8 über die Verwindung des Rotorblattes bei mittleren Außenmeridian-Tangentenwinkeln $\alpha_i$ von 40° bis 70°. Neben dem typischen Verlauf mit geringer $\beta$ - Änderung im Mittelbereich ± 0.25$l$ um 0.5$l$ , erkennt man das annähernde Konstantbleiben des Profilsehnenwinkels $\beta$ im radial äußersten Bereich, eine Charakteristik, die sich annähernd spiegelbildlich auch im stromabwärts nachfolgenden Leitschaufelgitter 26 vorfindet, das nach der bereits erläuterten FIG. 5 angeordnet sein könnte. FIG. 8G als Ergänzung zu FIG. 10B zeigt wieder die Ansicht aus der in FIG. 10B markierten Blickrichtung H.

FIG. 10C ( ergänzt durch FIG. 9G )

zeigt die Perspektive- Illustration zur wesentlichen Aussage der Figurengruppe 9 über die Verwindung des Rotorblattes bei steilen bis senkrechten Außenmeridian- Tangentenwinkeln $\alpha_i$ von 65° bis 90°.

Radial nach außen fortschreitend erkennt man nach anfänglich stärkerem Abfall von $\beta$ die geringe Änderung von $\beta$ im Mittelstück, die allen erfindungsgemäßen Konfigurationen typisch zu eigen ist und den für steile Winkel $\alpha_i$ typischen Wiederanstieg des Winkels $\beta$ im äußersten Bereich der Blattlänge $l$.

Das Leitschaufelgitter 26 zeigt einen analogen Verlauf der Profile, nur entsprechend steiler. FIG. 9G zeigt die Ansicht in Blickrichtung H, markiert als verlängerte Profilsehne des Mittenprofils in FIG. 10C.

FIG. 7H

ist zum Vergleich zu den vorhin erläuterten FIG. 7G, 8G und 9G die in den FIG. 10A, 10B und 10C markierte analoge Ansicht H eines konventionellen Rotorblattentwurfes zum Vergleich mit den Ansichten FIG. 7G, 8G und 9G der erfindungsgemäßen Ausführung. Man erkennt auch in dieser Gegenüberstellung die besonders geringe Verwindung im Mittelteil der erfindungsgemäßen Ausführung in allen Varianten.

Für die Verwindung der Gebläserotorblätter der Konfigurationen FIG. 1 bis FIG. 12 kann man die Merkmale der Ansprüche 1, 2 und 3 in Verbindung mit der Meridiangestaltung des Kanals, in welchen das Gebläse ( Fan ) eingebettet wird, unter vielen Möglichkeiten einer mathematischen Bescchreibung auch folgende, vom Erfinder hergeleitete Beziehung verwenden :

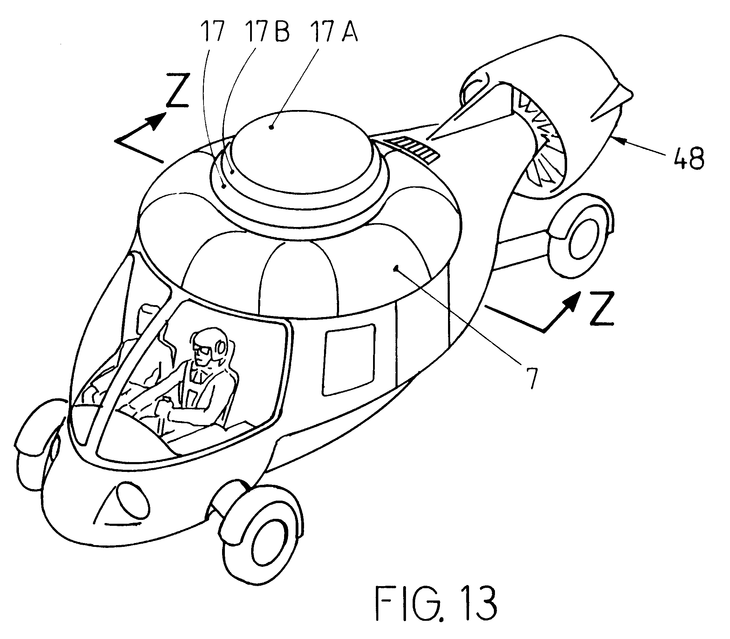

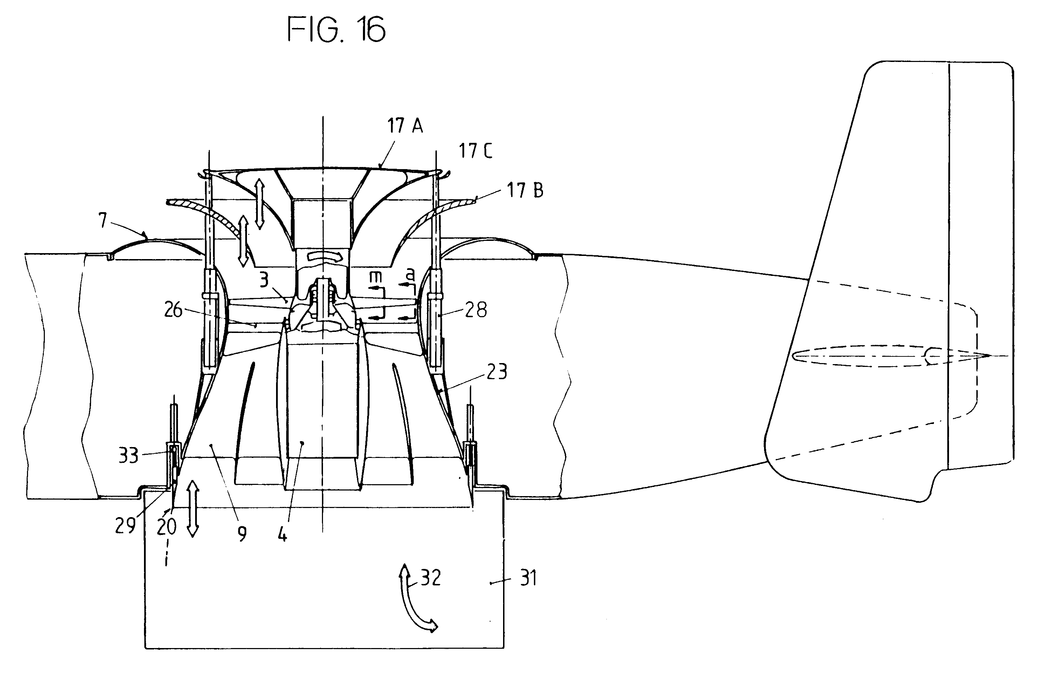

Für Hubtriebwerke mit oben offenem Einlauf nach FIG. 1 bis FIG. 12 im Gegensatz zu Hubtriebwerkskonfigurationen nach FIG. 13 bis FIG. 18 mit Zwangsumlenkung der Einlaufströmung durch Schilder 17, 17A, 17B und 17C gilt:

Der Tangens des radial äußersten Profilwinkels $\beta_{\infty i}$ des Gebläserotors 3 verhält sich zum Tangens des Profilwinkels $\beta_{\infty x}$ in der relativen Entfernung X von außen nach innen, wobei X der relative Anteil zwischen dem Wert "0" und "1", gemessen an der Rotorblattlänge $l$ ist, wie

$$\frac{\tan \beta_{\infty i}}{\tan \beta_{\infty x}} = A \; e^{B} \; C \; D$$

mit e als Basis des natürlichen Logarithmus und mit A, B und C als Geometriefunktionen, abhängig von einer vorgewählten Meridiankontur des Gebläsekanals. Die genauen Angaben für A, B und C, so wie die Festlegung der frei wählbaren Meridianparameter für die Benützung im Maßsystem mit den Grundeinheiten m, kg, s enthält Anspruch 12.

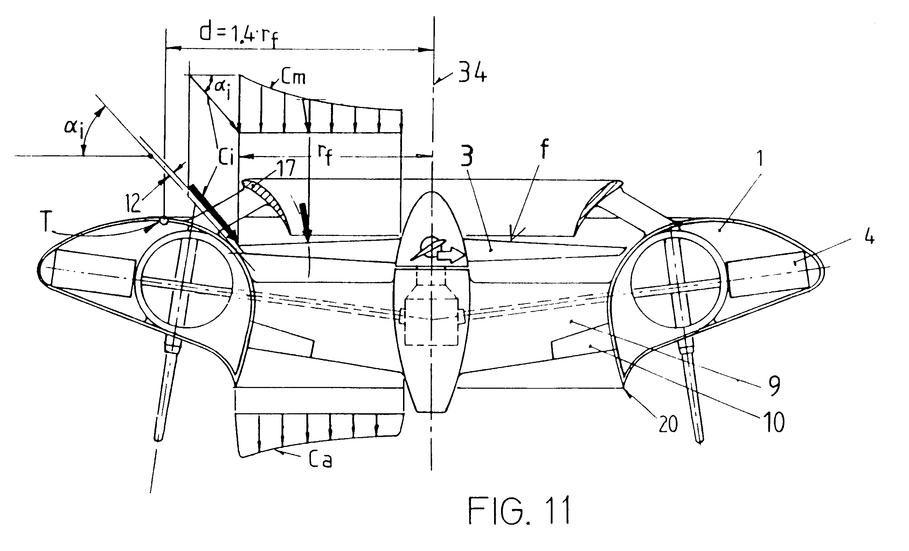

Anspruch 11 umreißt eine den Formeln in Anspruch 12 ( für den Fall eines im wesentlichen, das heißt einschließlich der FIG. 11 oben offenen Einlaufes ) und Anspruch 16 ( für den Fall der Einlaufzwangsumlenkung, das heißt für den Fall eines von oben gesehen abgedeckten Einlaufes ) übergeordnete allgemeine Formulierung.

FIG. 11

zeigt eine Ausführung wie FIG. 2 und 3, nur mit dem Unterschied eines zusätzlichen Leitschildes 17 im Einlauf, das mit stark gekrümmten Profil rotationssymmetrisch ausgebildet ist. Diese FIG. 11 stellt den Übergang zu den FIG. 13 bis 18 mit der Zwangsumlenkung der Strömung im Einlauf dar. Der Punkt T in der annähernd radialen Entfernung 1.4 $r_f$ = d von der Mittellinie 34, wobei d zwischen 1.2 $r_f$ und 1.5 $r_f$ schwanken kann, markiert den radialen Mindestbereich der Rotationssymmetrie. Dies gilt rückwirkend auch für die FIG. 2 und 3. Ansonsten gelten zu FIG. 11 auch die Erläuterungen der FIG. 2 und 3.

FIGUREN 12A und 12B,

wobei FIG. 12B eine vereinfachte Draufsicht zu FIG. 12A darstellt, zeigt die Möglichkeit, die Rotorschaufeln 3 des Gebläses f mittels eines Zwischenringes 49 radial in ein mit Drehbewegung 50' verstellbares Schaufelgitter 3A mit höherer Blattanzahl und in ein nicht verstellbares Schaufelgitter 3B mit geringerer Schaufelanzahl zu unterteilen. Dadurch kann bessere Rotationssymmetrie der Strömung im Außenbereich und höhere Steuerempfindlichkeit radial außen erzielt werden, was gerade bei der erfindungsgemäßen Auslegung mehr zu beachten ist als bei traditionellen Gebläseentwürfen, da bei dem erfindungsgemäßen Entwurf nach radial außen zunehmend wesentlich höhere Meridiangeschwindigkeiten auftreten und außen die Energiezufuhr wesentlich größer als innen ist.

FIG. 13

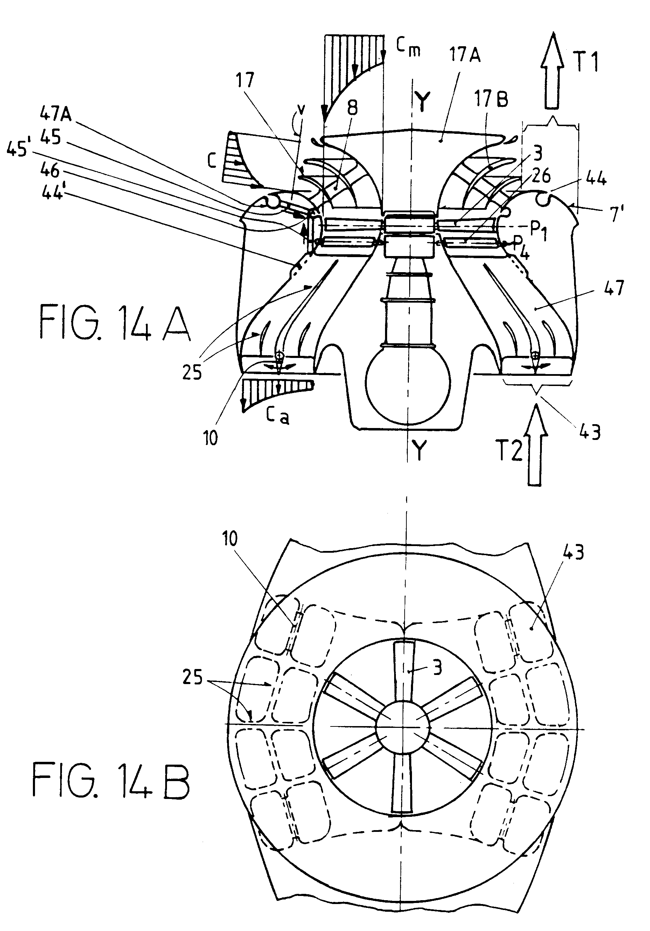

zeigt die perspektivische Ansicht eines auch als Automobil verwendbaren Luftschwebefahrzeuges mit einem erfindungsgemäßen Hubtriebwerk, beispielsweise nach den nachfolgenden FIG. 14A, 14B, 14C bis 14H.

Das Hubtriebwerk ist zum Zweck der besseren Strömungsführung und zum Zweck der Reduktion der schädlichen, Abtrieb erzeugenden Einlaufimpulskraft im Anschluß an den Einlaufwulst 7 durch mehrere Lagen von Leitschildern 17, 17A und 17B abgedeckt. Nähere Einzelheiten werden durch den Meridianschnitt Z-Z in den nachfolgenden FIG. 14A sichtbar und dort auch erläutert. Neben der Möglichkeit der zyklischen und kollektiven Lagesteuerung der Rotorblätter des Axial-Laufrades im Hubtriebwerk, analog wie bei einem Helikopter, bietet das Fan-Triebwerk 48 im Heck die Möglichkeit rascher Horizontalbeschleunigung.

FIG. 14A und FIG. 14B

FIG. 14A stellt den Schnitt Z-Z, markiert in FIG. 13 dar, welcher die senkrechte Triebwerksachse Y-Y beinhaltet. FIG. 14B stellt eine vereinfachte Draufsicht ohne Leitschilde dar, welche verdeutlicht, daß der Auslaßquerschnitt 43 von der Kreis-und Rotationssymmetrie in angemessener Entfernung stromabwärts von den Gebläseschaufelgittern 3 und 26 erheblich abweichen kann.

So zeigt FIG. 14B einen mit Hilfe von Schottwänden 25 unterteilten Auslaßquerschnitt 43, der in Anpassung an die Fahrzeuggeometrie nach FIG. 13 aus zwei geknickten Rechtecken besteht, was als allgemeine Abweichung von der Kreis-Rotationssymmetrie in Anspruch 7 ausgedrückt wird.

FIG. 14A zeigt eine stark gekrümmte Außenmeridiankontur des Gebläsekanals und die durch Schilder 17, 17A und 17B erfolgende Zwangsumlenkung der Einlaufströmung um etwas weniger als 90°, so daß sich die Rest-Einlaufimpulskräfte T3, deren Definition einleitend in der theoretischen Auseinandersetzung erfolgte, annähernd sternförmig aufheben, ein günstiger Umstand, der nur bei reibungsbehafteter wirklicher Strömung herbeizuführen ist.

Im Prinzip können jedoch die in den FIG. 13, 14, 15, 16 und 17 gezeigten Triebwerke auch mit oben offenen Einläufen nach den FIG. 1 bis 12 ausgestattet werden. Durch die sich annähernd sternförmig aufhebenden Rest-Einlaufimpulskräfte T3, welche aus den vollen Impulskräften T3' minus der statischen Unterdruckkraft T3'' in einem Kontrollquerschnitt am Beginn des Einlaufkanals vor den Rotorschaufeln bestehen, sind die wesentlich wirksamen Kräfte nur mehr auf die in FIG. 14A eingetragene Unterdruckkraft T1, die über den mit Klammer gelennzeichneten Teil des Wulstes 7' wirkt und auf die Kraft T2 des Impulses im Auslaßquerschnitt 43 beschränkt. FIG. 14A zeigt über der Bezugsgeraden v senkrecht zu einer Tangente an den Wulst 7' die typische Meridiangeschwindigkeitsverteilung c vor dem Einlauf,, die neben der Wulstkrümmung auch die erfindungsgemäße Auslegung des Gebläses mit den Rotorschaufeln 3 und den Leitschaufeln 26 für ein Meridian-Geschwindigkeitsprofil $c_m$ in der Ebene der Rotorschaufelachsen P1 bewirkt wird. Diese beabsichtigte Verzerrung der Geschwindigkeitsprofile, die mit dem Kräftegleichgewicht auf den stark gekrümmten Einlaufstromlinien begründet ist, setzt sich bis in den Auslaßquerschnitt fort, wo das Profil der Austrittsgeschwindigkeit $c_a$ gezeigt wird, wobei, wie einleitend unter " Mangel Nr. 6 " der etablierten Fachliteratur festgestellt wurde, auf die Froude'sche Strahloptimierung bewußt verzichtet wird.

Die Rotorschaufeln 3 sind um die Drehachsen P1 und die nicht rotierenden, aber drehbaren Leitschaufeln 26 sind um die Achsen P4 in geeigneter, voneinander abhängiger Weise, zyklisch und kollektiv verstellbar, analog wie bei einem Rotorkopf eines Helikopters. Der Kanal 47 stromabwärts vom Gebläse wird meist als Diffusor ausgebildet sein. Ruder 10 im Austritt bewerkstelligen im Schwebeflug erwünschte Drehbewegungen um die Achse Y-Y.

FIGURENGRUPPE 14C, 14D, 14E, 14G und 14H :

Die FIG. 14C zeigt eine eine Ausschnittsvergrößerung der FIG. 14A. Das Axialgebläse (Fan) f besteht aus der rotierenden Nabe 2 , den Laufschaufeln 3 mit den nachfolgenden Leitschaufeln 26, deren voneinander abhängige zyklische und kollektive Verstellung bereits erläutert wurde. An der Stelle größten statischen Unterdruckes, nämlich an der Saugseite der Schaufeln 3 in der Meridianaußenkontur, befindet sich ein Ringsammelkanal 46, aus welchem die Rotorschaufeln 3 ständig Luft absaugen, die an Stellen 44 im Einlaufwulst 7' und an Stellen 44' im ablösungsgefährdeten Diffusor durch die statische Druckdifferenz zwischen 44 und 46, bezw. zwischen 44' und 46 über die Verbindungskanäle 45 und 45' dem Ringraum 46 zugeführt wird. Durch diese Ausnützung des Axialgebläses als Grenzschichtabsauger wird das Anliegen der Strömung im absichtlich stark gekrümmten Wulst 7', mit Krümmungsradien zwischen 0.2 $r_f$ und 0.5 $r_f$ , gefördert . Die Stützrippen 8, welche die starren Einlaufschilde 17, 17A, 17B und 17C mit dem Wulst 7' verbinden, können einen drehbeweglichen Teil 8A angrenzend zum Wulst 7' aufweisen, um ähnlich wie eine Windfahne, eine etwaige, zeitlich vorübergehende Einlaufströmung mit Drall nicht zu behindern.

Sehr wesentlich für das einwandfreie Funktionieren der erfindungsgemäß verwundenen Rotorblätter 3 ist die mit kleinem Krümmungsradius r am Gebläserotor vorbei stromabwärts gezogene konvexe Krümmung des Wulstes 7', was im Anspruch 5 zum Ausdruck kommt, in welchem auch der radiale Mindestbereich der Rotationssymmetrie der Kontur des Wulstes 7 , bezw. 7' festgelegt wird. Dieser beginnt einlaufseitig in einer radialen Entfernung d = 1.2 $r_f$ bis d = 1.5 $r_f$ , im Mittel bei etwa 1.4 $r_f$ ( siehe rückwirkend FIG. 2, markierter Punkt T ).

Die Verwindung der Rotorblätter 3 in den FIG. 13 bis 18 mit Zwangsumlenkung des Einlaufes ( = Abdeckung des Einlaufes ), kann im erfindungsgemäßen Sinn durch die Formel des Anspruches 16 formuliert werden, die für steile bis rechtwinkelige Werte für den Randwinkel $\alpha_i$ , für den Gebläseradius $r_f$ , den Krümmungsradius r außen, gegenüber der Blattspitze, den Krümmungsradius R an der Nabe und den Nabenradius $\nu r_f$ als vorwählbare Konstruktionsparameter lautet :

$$\frac{\tan \beta_{\infty i}}{\tan \beta_{\infty x}} \;=\; (\,1 - X\,(\,1 - \nu\,)\,)\; e^{B'} \;,$$

wobei gilt

$$\frac{\tan \beta_i}{\tan \beta_x} \;\approx\; \frac{\tan \beta_{\infty i}}{\tan \beta_{\infty x}}$$

und

$$B' \;=\; 0.5\,X\,r_f\,(\,1 - \nu\,)\,\Big(\,\frac{1}{r} + \frac{1}{r + (\,R - r\,)\,(\,X + f_3 \sin(\,X\,180\,)\,)}\,\Big)$$

mit $f_3 = 0.2$ als Konstante.

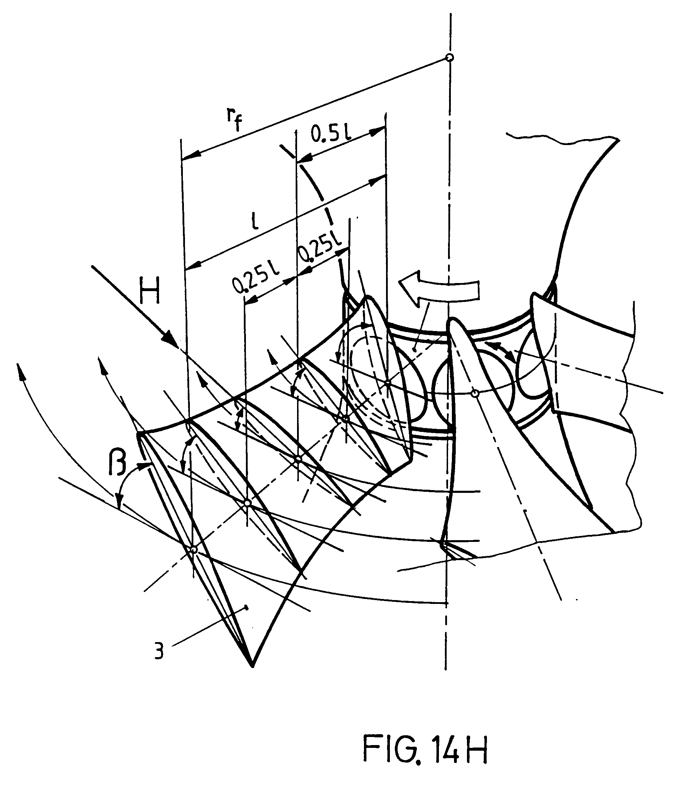

Das Diagramm nach FIG. 14D zeigt den typischen Verlauf der in FIG. 14G definierten Blattwinkel $\beta_\infty$ und damit des annähernd zu $\beta_\infty$ proportionalen Winkels $\beta$ , wie früher zu FIG. 5 erläutert wurde, der nach dieser Näherungsformel des Anspruches 16 berechnet wurde und wofür die typischen Zahlenwerte des Anspruches 17 gelten und die Variante nach Anspruch 18. Danach gibt es wie bei der FIG. 9D einen besonders starken Wiederanstieg von $\beta$ im radial äußeren Bereich um den Betrag + $\Delta\beta$ und den für alle erfindungsgemäßen Rotorblattverwindungen typischen wenig verwundenen Teil im Mittelbereich ± 0.25$l$ um 0.5$l$ mit $l$ als Blattlänge nach FIG. 14D, ausgedrückt als besonders großes Verhältnis des Mittenwertes $\beta_m$ zur Änderung $\Delta\beta_1$ im Mittelbereich nach Anspruch 1 . Die FIG. 14H illustriert dieses Merkmal in Perspektive wie früher die FIG. 10C für oben offene Einläufe.

13

FIG. 14E zeigt die zu diesem $\beta$ - Verlauf gehörende besonders starke radiale Zunahme von $h_u$ mit auf bis zu 10 fachen Werten auf dem Radius $r_f$ gegenüber Werten auf dem Nabenradius $\nu r_f$, was von den annähernd konstanten bis fallenden Verläufen traditioneller Entwürfe weit abweicht.

FIG. 14F zeigt die radial bis auf das 3 fache zunehmende Verteilung der Meridiangeschwindigkeit $c_m$ in der Ebene der Rotorblattdrehachsen P1.

FIG. 14G veranschaulicht auch die Möglichkeit kollektiver und zyklischer Blattverstellung sowohl der Laufschaufeln 3 mit der Drehbewegung 41 um die Achsen P1 und der nicht rotierenden Leitschaufeln 26 mit der Drehbewegung 42 um die Achsen P4, wobei die Bewegung der Leitschaufeln 26 in vorbestimmter Weise von der Bewegung der Laufschaufeln 3 um die Achsen P1 abhängt. FIG. 14G repräsentiert den typischen Schnitt S-S markiert in FIG. 14C.

FIG. 15

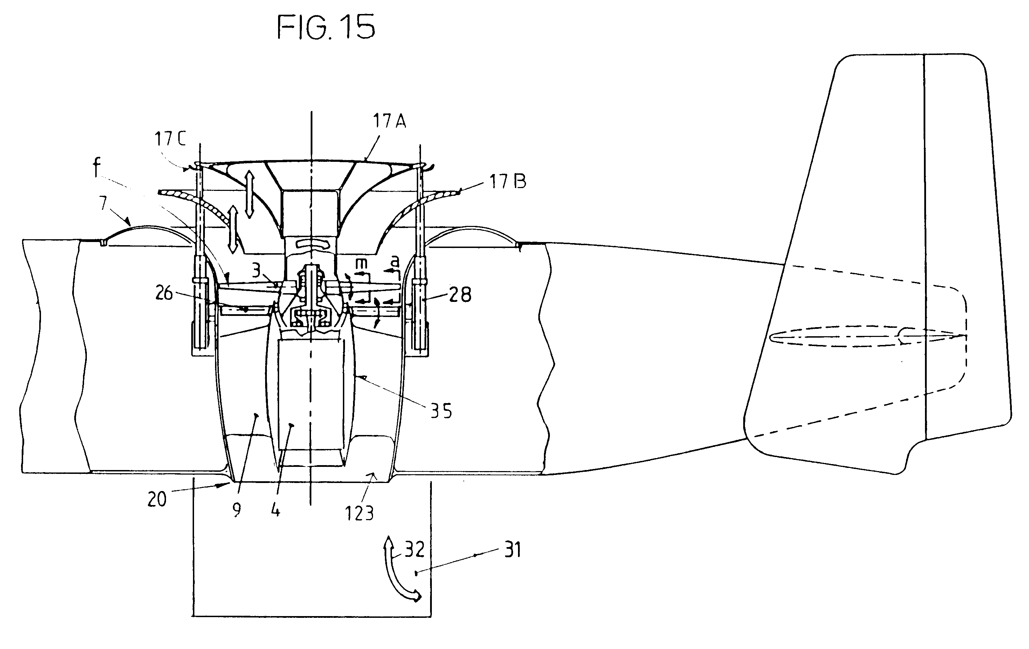

zeigt den Einbau eines erfindungsgemäßen Hubtriebwerkes als Hilfsmaschine für die Vertikalflugphase. Wesentlich ist die axiale Einziehbarkeit der Leitschilder 17A und 17B ( es können auch mehrere angeordnet sein ) mit Hilfe der Teleskope 28, die pneumatisch, hydraulisch oder als mechanische Spindeln betätigt werden. Für das Gebläse gilt die zur Figurengruppe 14 gesagte Erläuterung, wobei die Steuerung auf eine rein kollektive Blattverstellung allein für rasche Schubänderungen beschränkt sein könnte. Die nachfolgende FIG. 17B zeigt links den typischen Mitttelschnitt m-m und rechts den erfindungsgemäß steileren Außenschnitt a-a der Rotorblätter 3. Die Antriebsmaschine 4 ist in diesem Beispiel in der Nabe 35 untergebracht, sie könnte aber ebenso gut seitlich in der Zelle, wie in FIG. 17 angeordnet sein. Stützrippen 9 halten die Nabe 35. Wesentlich ist der stark gekrümmte rotationssymmetrische Einlaufwulst 7. Das Ausführungsbeispiel der FIG. 15 zeigt eine Beschleunigungsdüse stromabwärts vom Gebläse f, wie dies bei Anwendung eines Gebläses mit höherem Druckverhältnis für höhere Auslaßschubkraft T2 angebracht ist.

Ein Abschlußdeckel 31 vollführt nach Abstellen des Hubtriebwerkes eine geeignete Schließbewegung 32, um ebenso wie die Maßnahme des Einziehens der Schilder 17 den Luftwiderstand im Horizontalflug herabzusetzen. Wesentlich sind auch die scharfen, nach unten gerichteten, vorstehenden Abreißkanten 20, um seitliches Nachsaugen an der Rumpfunterseite zu minimieren.

FIG. 16

unterscheidet sich von FIG. 15 nur im Diffusor 23 anstelle der Beschleunigungsdüse 123 stromabwärts vom Gebläse, so daß bei Verzicht auf hohe Schubleistung mit Hilfe niedriger Auslaßgeschwindigkeiten in bekannter Weise neben der erfindungsgemäßen Steigerung der Wulst-Unterdruckkraft T1 ein großes Verhältnis F/P und damit ein niedriger Verbrauch von Kraftstoff im Schwebeflug erzielt werden kann. Auf Grund der Diffusor-Erweiterung kann eine weit vorstehende Abreißkante an einem Ring 29 realisiert werden, der in den Ringraum 33 einziehbar ist.

FIG. 17 und FIG. 17A

zeigt die Kombination eines erfindungsgemäßen Einlaufes für ein Hubtriebwerk in einer Flugzeugzelle mit einem mehrstufigen Axialkompressor für hohe Druckverhältnisse zur Erzeugung hoher Auslaßstrahlgeschwindigkeiten und damit höhere Schübe als die bisher behandelten Konfigurationen mit ausgesprochen niedrigen Druckverhältnissen. Im Beispiel sind drei Kompressorstufen gezeigt, die mit I, II und III bezeichnet werden und aus je einem Rotorblattkranz 3 und nachfolgenden, nicht rotierenden Leitschaufelgitter 26 bestehen.

Die Stufe I weist voll die erfindungsgemäßen Merkmale betreffend die Verwindung der Rotorblätter auf, was im obersten Diagramm der FIG. 17A zum Ausdruck kommt, das die gleiche radiale Verteilung der Blattwinkel $\beta$ zeigt, wie die FIG. 14D, nämlich den erfindungsgemäßen starken Wiederanstieg von $\beta$ radial außen. Das Diagramm über den radialen Verlauf von $\beta$ der letzten Stufe III hingegen zeigt den typischen bekannten hyperbelähnlich fallenden Verlauf von $\beta$, wie es für annähernd zylindrisch ummantelte Gebläse angebracht ist.

Die dazwischen liegenden Stufen, im Beispiel ist es nur die Stufe II allein, weisen einen Übergang der $\beta$ - Verteilung zwischen I und III auf. Diese Möglichkeit der mehrstufigen Auslegung wird in Anspruch 4 markiert. Die Antriebsmaschine 4 ist in diesem Beispiel im Rumpf untergebracht, sie könnte auch an jeder beliebigen anderen Stelle aufscheinen. Der Auslaß 123' ist mittels einer Kinematik 50 im Querschnitt veränderlich.

**FIG. 17 B**

zeigt gemäß den Markierungen in den FIG. 15,16 und 17 links den typischen Schnitt m-m durch ein Rotorblatt 3 auf etwa halber Blattlänge und zum Vergleich rechts davon den typischen Schnitt a-a auf dem äußersten Radius $r_f$ mit der erfindungsgemäßen typischen Zunahme von $\beta$ um $+ \Delta\beta$, so daß die Sehne L' des äußersten Profiles wesentlich steiler ist, als die Sehne L eines mittleren Profiles.

**FIG. 18**

zeigt eine komplexe Ausführung für ein maximales Verhältnis von Auftrieb F zu Maschinenleistung P im Schwebeflug, verwendbar als sparsamer fliegender Kran mit Kabine 13' und mehreren Antriebsmaschinen 4, die über Getriebe und Fernwellen das Gebläse f' antreiben, dessen typische Profilschnitte m-m und a-a gleichfalls durch FIG. 17B beschrieben werden.

Durch die erfindungsgemäße Verwindung und durch die starke krümmung r des Wulstes 7 werden besonders hohe Einlaufgeschwindigkeiten $c_{il}$ im äußersten Kanal Ic der drei Kanäle Ic, IIc und IIIc erzeugt, die durch die den Einlauf unterteilenden rotationssymmetrischen Schilde 17 und 17B entstehen. Man erkennt die kleineren Einlaufgeschwindigkeiten $c_{ill}$ und $c_{illl}$ an den kürzer werdenden symbolischen Pfeilen. Durch diese Verteilung der Einlaufgeschwindigkeit entsteht auf dem Wulst 7 eine beabsichtigt hohe Unterdruckkraft $T1_I$, während entsprechend kleinere Kräfte $T1_{II}$ und $T1_{III}$ auf die Schilde 17 und 17B wirken. Die typische Zunahme der Meridiangeschwindigkeit $c_{mv}$ zeigt das obere Diagramm.

Diese radiale Geschwindigkeitsverteilung setzt sich bis in den Auslaß fort, wo die Pfeile $c_{al}$ und $c_{alll}$ die radiale Zunahme der Aulaßgeschwindigkeit $c_a$ andeuten, welche die Auslaßimpulsschubkraft T2 verursacht. Die Einlaufimpulskräfte, welche sonst Abtrieb erzeugen, trotz ihrer teilweisen Kompensation durch den Unterdruck im Einlauf, heben sich bei dieser Ausführung annähernd horizontal-sternförmig auf. Der stark erweiterte Diffusor 23 muß zur Vermeidung von Ablösung durch Schilde 25 sorgfältig unterteilt werden. Unter Umständen muß die Grenzschicht abgesaugt werden.

**FIG. 18A**

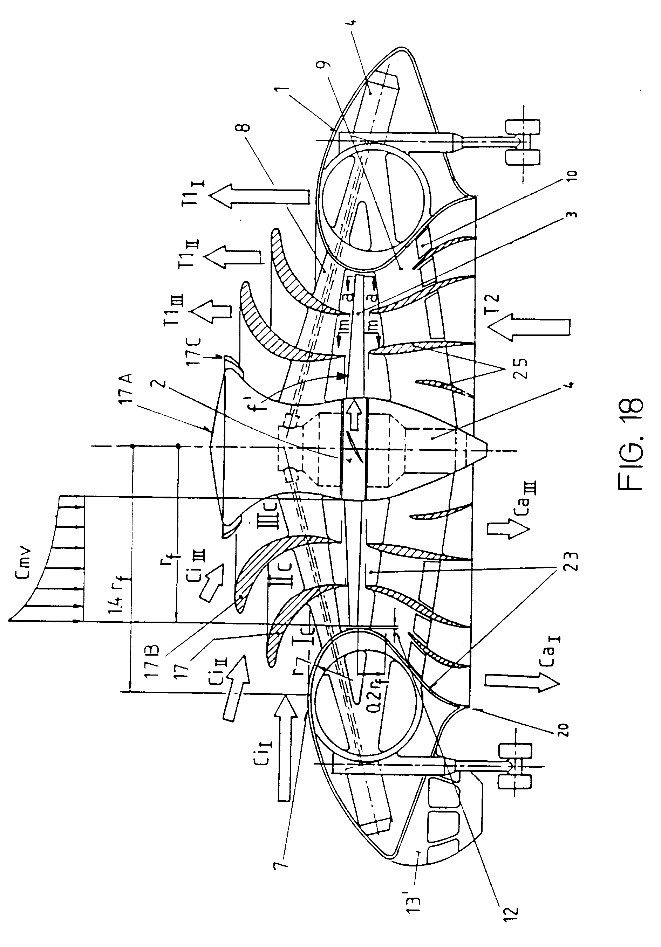

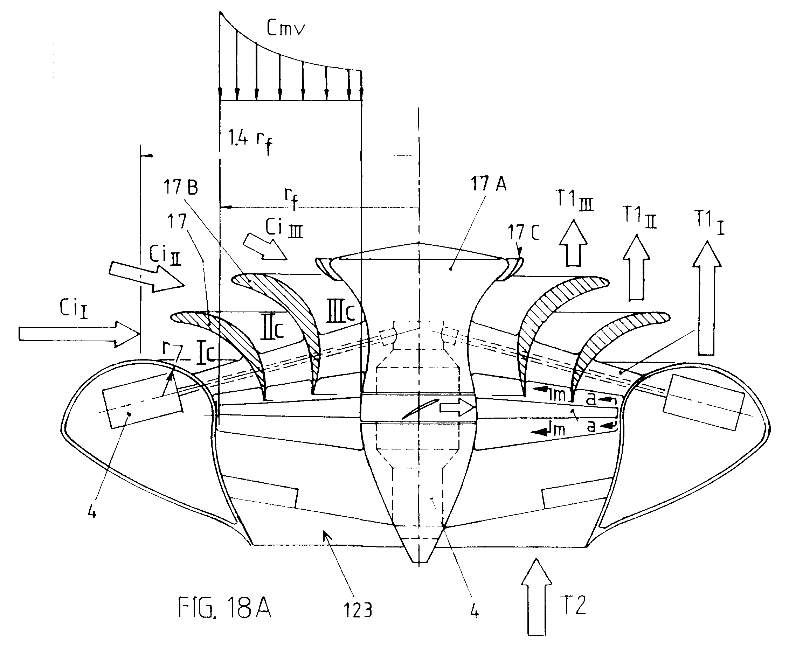

zeigt eine Variante der FIG. 18 mit einer Beschleunigungsdüse 123 anstelle eines Diffusors 23, eine Ausführung für höhere Schübe bei gleichzeitigem verzicht auf maximales Verhältnis F/P.

**Patentansprüche**

1. Selbständig fliegendes oder in einem Flugkörper als Zusatzgerät einsetzbares Hubtriebwerk mit einem rotationssymmetrisch konvex gewölbten Einlaufwulst ( 7 ) rund um ein mit Rotorblättern ( 3 ) bestücktes Axialgebläse ( f ), das im Betriebszustand zwischen Einström- Oberseite und Abström- Unterseite eine Gesamtdruckdifferenz erzeugt,
   dadurch gekennzeichnet,
   daß bei einem Spalt von weniger als 1/25 des Gebläserotor-Außendurchmessers zum umschließenden Wulst das Verhältnis des mittleren Anstellwinkels ($\beta_m$), definiert als der Winkel der Profilsehne der Rotorblätter gegenüber der Umfangsdrehrichtung im Bereich der Hälfte (0.5$l$) der Blattlänge ($l$) gegenüber einem Anstellwinkel- Differenzwinkel ($\Delta\beta_1$), definiert als Winkel- Differenz innerhalb des Mittelbereiches (0.5$l$) ± einem Viertel (0.25$l$) der Blattlänge ($l$) mindestens 3.8, vorzugsweise 8 bis 12 beträgt

2. Hubtriebwerk nach Anspruch 1
   dadurch gekennzeichnet,
   daß die radiale Verteilung der spezifischen Energie ( $h_u$ ), definiert als die Energiezufuhr pro kg im Gebläse durchgesetzer Luft, die der totalen Druckdifferenz zwischen Einströmseite und Abströmseite proportional ist, von der Nabe der Rotorblätter bis zur Blattspitze um wenigstens das 1.5 fache, vorzugsweise um mehr als das 3 fache bis zum 10 fachen zunimmt ( FIGUREN 7C, 8C, 9C, 14E ).

3. Hubtriebwerk nach Anspruch 1 oder 2,
   dadurch gekennzeichnet,
   daß der Tangentenwinkel ($\alpha_i$) des Wulstes zwischen 50° und 90° liegt und der Anstellwinkel ($\beta$) der Profilsehne gegenüber der Umfangsdrehrichtung ausgehend von einem radialen Mittelbereich der Rotorblattlänge ($l$) von (0.5$l$ ± 0.25$l$) um einen Wert nach radial außen zunimmt, der zwischen 0° und 20°, vorzugsweise zwischen 0 und 9 Winkelgraden liegt ( FIGUREN 8D, 9D und 14D ).

4. Hubtriebwerk nach einem der vorhergehenden Ansprüche,
dadurch gekennzeichnet,
daß bei einem mehrstufigen Axialgebläse die Änderung des Profilsehnenwinkels ($\beta$) gegenüber dem Wert im definierten radialen Mittelbereich nach radial außen von einem positiven Wert der ersten Stufe zur jeweils nachfolgenden Stufe abnimmt, gegebenenfalls mit steigender Stufennummer zu einem negativen Wert wird, wobei der Winkelverlauf über dem Radius des Rotorblattes zumindest in der letzten Gebläsestufe wendepunktfrei ist und daß gegebenenfalls die Drehrichtung zueinander benachbarter Stufen einander entgegengesetzt ist ( FIG. 17A ).

5. Hübtriebwerk nach einem der vorhergehenden Ansprüche,
dadurch gekennzeichnet,
daß die radiale Ausdehnung der konvexen rotationssymmetrischen Wölbung des Einlaufwulstes ( 7 )- die Tangente ab welcher die rotationssymmetrische Wölbung in Strömungsrichtung beginnt, muß nicht horizontal sein- in einem radialen Abstand beginnt, der dem 1.2 - bis 1.5 - fachen, vorzugsweise dem 1.3 - bis 1.4 - fachen Außenradius ( $r_f$ ) des Gebläserotors ( f ) entspricht und/ oder daß daß die konvexe rotationssymmetrische Wölbung des Einlaufwulstes ( 7 ) in einem Abstand stromabwärts des der Einström-Oberseite zugekehrten Rotorblattkranzes endet, der zumindest dem 0.1 - bis 0.3 - fachen, vorzugsweise dem etwa 0.2 - fachen Außenradius ( $r_f$ ) des Gebläserotors ( f ) entspricht.

6. Hubtriebwerk nach einem der vorhergehenden Ansprüche,
dadurch gekennzeichnet,
daß entweder
a) im Falle einer offenen Einlaufseite, frei von Umlenkschilden und und Unterteilungsschilden der Rotorblattkranz ( f ) so hoch über dem kleinsten Innenradius ($r_{k\ min.}$) des torinsartigen Einlaufwulstes ( 7 ) liegt, daß der genannte Tangentenwinkel ($\alpha_i$) - gemessen zu einer Horizontalebene senkrecht zur Rotordrehachse ( 34 ) - 30° bis 70°, vorzugsweise 40° bis 60° beträgt oder daß
b) im Falle eines gekrümmten rotationssymmetrischen Einlaufkanals ($\alpha_i$) 55° bis 90°, vorzugsweise 70° bis 90° beträgt, wobei gegebenenfalls einlaufseitige Leitschilder ( 17 ) vorgesehen sind.

7. Hubtriebwerk nach einem der vorhergehenden Ansprüche,
dadurch gekennzeichnet,
daß der Auslaßkanal stromabwärts des Gebläses ( f ) in wenigstens zwei Kanäle ( 43 ) aufgegliedert ist, deren Querschnitt senkrecht zur Gebläseachse ( 34 ) zweckmäßig von der Kreisform und auch von der Kreis-Rotationssymmetrie abweicht ( FIGUREN 14A, 14B ).

8. Hubtriebwerk nach einem der vorhergehenden Ansprüche,
dadurch gekennzeichnet,
daß der Rotor des Gebläses ( f ) mit Rotorblättern ( 3 ) versehen ist, deren Profilsehnenwinkel ($\beta$) mit Hilfe einer Verstelleinrichtung zyklisch und kollektiv verstellbar sind und daß vorzugsweise stromabwärts von diesem Rotor synchron mit den Rotorblättern ( 3 ) verstellbare, im wesentlichen steil gerichtete Leitschaufeln ( 26, 10A ) vorgesehen sind und daß gegebenenfalls Steuerrruder ( 10 ) oder dergleichen angeordnet sind.

9. Hubtriebwerk nach einem der vorhergehenden Ansprüche
dadurch gekennzeichnet,
daß mindestens ein Teil der Rotorblätter ( 3A, 3B ) durch einen zur Rotorachse koaxialen Ring ( 49 ) unterteilt ist und daß zumindest eines der folgenden Merkmale vorgesehen ist:
a) Die Anzahl der Rotorblätter ( 3B ) innerhalb des Ringes ( 49 ) ist geringer als die Anzahl der Rotorblätter ( 3A ) an der Außenseite des Ringes,
b) die Rotorblätter innerhalb des Ringes ( 49 ) sind starr ausgebildet, wogegen die Rotorblätter ( 3A ) außerhalb des Ringes ( 49 ) zur Veränderung ihrer Anstellwinkel zyklisch und kollektiv verstellbar sind,
c) über der Gesamtlänge der Rotorblätter - das ist die Länge von ( 3A ) plus die Länge von ( 3B ) - ist der Verlauf des Anstellwinkels ($\beta$) von radial innen nach radial außen so beschaffen, daß auch die totale Druckdifferenz zwischen Einström-Oberseite und Abström-Unterseite radial von innen nach außen zunimmt.

**10.** Hubtriebwerk nach einem der vorhergehenden Ansprüche,
dadurch gekennzeichnet,
daß stromabwärts vom Rotor sich radial erstreckende Leitschaufeln ( 26 ), oder Ruder vorgesehen sind, deren Anstellwinkel gegenüber der Umfangsdrehrichtung des Rotors eine den Rotorblättern ( 3 ) und deren Winkel ($\beta$) proportionale radiale Verteilung haben, vorzugsweise in abgeschwächter Form , wobei die Anstellwinkel der Leitschaufeln ( 26 ) - ausgehend von einem Mittelbereich ihrer radialen Erstreckung, umfassend das zweite und dritte Viertel ihrer Länge - nach außen hin mindestens konstant bleiben, gegebenenfalls nach radial außen zunehmen.

**11.** Hubtriebwerk nach einem der vorhergehenden Ansprüche,
dadurch gekennzeichnet,
daß das Verhältnis des Tangens des Profilsehnenwinkels ($\beta$) am äußersten Radius der Rotorblätter ( 3 ) zum Tangens des Profilsehnenwinkels ($\beta$) in einer relativen Entfernung X von diesem äußersten Punkt nach radial innen zu, wenigstens annähernd der folgenden Formel genügt:

$$\frac{\tan \beta_i}{\tan \beta_x} \;=\; A\, e^{B}\, C'$$

worin bedeuten
$\beta_i$ = den Profilsehnenwinkel am äußersten Radius des Rotorblattes,
$\beta_x$ = den Profilsehnenwinkel in einer relativen Entfernung X ( gemessen als relativer Anteil der bezogenen Gesamtblattlänge $l$ = 1 ) im Bereich vom äußersten Rotorblattradius bis zum Radius der Nabe,
$A$ = den Ausdruck 1 - $X$ (1 - $\nu$) mit
$\nu$ = Nabenverhältnis

$$= \frac{Nabenradius}{Rotorblattradius}$$

und wo ferner
$B$ und $C'$ jeweils einen Geometriefaktor in Abhängigkeit vom Krümmungsradius des Einlaufwulstes an der Stelle gegenüber der Rotorblattspitze, weiters in Abhängigkeit vom Gebläseaußenradius und vom Tangentenwinkel $\alpha_i$ des Wulstes an der der Rotorblattspitze gegenüberliegenden Stelle bedeuten. Der Nabenradius ( $r_n$ ) ist als Radius der Rotornabe in der Ebene der Blattdrehachsen definiert.

**12.** Hubtriebwerk nach Anspruch 11,
dadurch gekennzeichnet,
daß der radiale Verlauf der zueinander annähernd proportionalen Profilanstellwinkel ($\beta$) und ($\beta_\infty$) der Rotorblätter ( 3 ) eines einstufigen Axialgebläses oder wenigstens der ersten Stufen eines mehrstufigen Axialgebläses wenigstens annähernd der folgenden Beziehung genügt: Für Hubtriebwerke mit oben offenem Einlauf ohne Umlenkschilde verhält sich der Tangens des äußersten Profilwinkels $\beta_{\infty i}$ zum Tangens des Profilwinkels $\beta_{\infty x}$ in der relativen Entfernung X von radial außen nach radial innen wie

$$\frac{\tan \beta_{\infty i}}{\tan \beta_{\infty x}} \;=\; A\, e^{B}\, C\, D$$

wobei gilt

17

$$\frac{\tan \beta_i}{\tan \beta_x} \approx \frac{\tan \beta_{\infty i}}{\tan \beta_{\infty x}}$$

mit den Hilfsfunktionen

$$\Delta \alpha = a \tan \frac{X r_f (1 - \nu) \cos \alpha_i}{r + r_f (1 - \nu) \sin \alpha_i}$$

$$\Delta \alpha_{\text{max.}} = a \tan \frac{r_f (1 - \nu) \cos \alpha_i}{r + r_f (1 - \nu) \sin \alpha_i}$$

$\alpha_x = \alpha_i + \Delta\alpha + X(90 - \alpha_i - \Delta\alpha_{max.})$

$r_{ix} = r_f - r(\cos(90 - \alpha_i - \Delta\alpha) - \cos(90 - \alpha_i))$

$r_{fx} = r_f(1 - X(1 - \nu))$

$$m = r_{ix} - r_{fx} \qquad q = \frac{m}{\cos (90 - \alpha_i - \Delta \alpha)}$$

$r_x = r(1 + f_1 \tan(X90)) + q$

$$q_a = (\frac{r + q}{\cos \Delta \alpha} - r)(1 - (\frac{f_2}{(\frac{\alpha_i}{90})^2} - f_2) X)$$

$$C = \frac{q \left[ r_f (1 - X (1 - \nu)) + \frac{m}{2} \right]}{q_a (r_f - 0.5 q_a \cos (90 - \alpha_i - (0.5 + X 0.5) \Delta \alpha))}$$

$$B = 0.5 q (\frac{1}{r} + \frac{1}{r_x})$$

$A = 1 - X(1 - \nu)$

$$D = \frac{\sin \alpha_i}{\sin \alpha_x}$$

worin bedeutet

$\alpha_i$ = Außenmeridiantangentenwinkel gegenüber $r_f$

r = Außenmeridiankrümmungsradius gegenüber der Rotorblattspitze $r_f$

$r_f$ = Gebläserotor- Außenradius

$\nu$ = Nabenverhältnis

$$\left( \; = \; \frac{r_n}{r_f} \; \right)$$

$f_1$ = 3, $f_2$ = 0.02

e = Basis des natürlichen Logarithmus

**13.** Hubtriebwerk nach Anspruch 12,
dadurch gekennzeichnet,
daß das Verhältnis der Parameter wenigstens annähernd den Relativzahlenwerten folgender Tabelle entspricht ( FIGUREN 7B, 7D ) :

| | | | | | | |
|---|---|---|---|---|---|---|
| $r_f$ | 1.0000 | 1.0000 | 1.0000 | 1.0000 | 1.0000 | 1.0000 |
| r | 0.3100 | 0.3100 | 0.3100 | 0.3100 | 0.3100 | 0.3100 |
| $\nu$ | 0.2000 | 0.2000 | 0.2000 | 0.2000 | 0.2000 | 0.2000 |
| X | 0.1250 | 0.2500 | 0.3750 | 0.5000 | 0.7500 | 0.9999 |
| $\alpha_i$ | 40.0000 | 40.0000 | 40.0000 | 40.0000 | 40.0000 | 40.0000 |
| f1 | 3.0000 | 3.0000 | 3.0000 | 3.0000 | 3.0000 | 3.0000 |
| f2 | 0.0200 | 0.0200 | 0.0200 | 0.0200 | 0.0200 | 0.0200 |
| $\Delta\alpha$ | 11.5571 | 19.2567 | 24.5520 | 28.3828 | 33.4525 | 36.6307 |
| $\Delta\alpha_{max.}$ | 36.6317 | 36.6317 | 36.6317 | 36.6317 | 36.6317 | 36.6317 |
| $\Delta\alpha_x$ | 53.2381 | 62.5988 | 69.5751 | 75.0669 | 83.4787 | 89.9976 |
| $r_{ix}$ | 0.9564 | 0.9328 | o.9193 | 0.9111 | 0.9021 | 0.8977 |
| $r_{fx}$ | 0.9000 | 0.8000 | 0.7000 | 0.6000 | 0.4000 | 0.2001 |
| m | 0.0564 | 0.1328 | 0.2193 | 0.3111 | 0.5021 | 0.6976 |
| q | 0.0720 | 0.1545 | 0.2429 | 0.3346 | 0.5238 | 0.7170 |
| $r_x$ | 0.5670 | 0.8498 | 1.1743 | 1.5746 | 3.0790 | 5,921.5908 |
| $q_a$ | 0.0791 | 0.1784 | 0.2888 | 0.4055 | 0.6473 | 0.8910 |
| C | 0.8698 | 0.8074 | 0.7746 | 0.7583 | 0.7555 | 0.7796 |
| B | 0.1797 | 0.3402 | 0.4951 | 0.6459 | 0.9299 | 1.1565 |
| A | 0.9000 | 0.8000 | 0.7000 | 0.6000 | 0.4000 | 0.2001 |
| D | 0.8024 | 0.7240 | 0.6859 | 0.6653 | 0.6470 | 0.6428 |

$$\frac{c_{miv}}{c_{mxv}} \quad 0.8353 \quad 0.8215 \quad 0.8717 \quad 0.9623 \quad 1.2387 \quad 1.5930$$

$$\frac{\tan\beta_{\infty i}}{\tan\beta_{\infty x}} \quad 0.7518 \quad 0.6572 \quad 0.6102 \quad 0.5774 \quad 0.4955 \quad 0.3187$$

wobei $(c_{miv})$ die Vertikalkomponente der größten, unter dem Winkel $(\alpha_i)$ geneigten Meridiangeschwindigkeit $(c_i)$ bedeutet ( FIGUREN 7B und 8B ) mit dem gesamten Funktionsverlauf der Komponenten $(c_{mv})$ über dem Blattradius und anderseits $(c_{mxv})$ die Vertikalkomponente einer beliebigen Meridiangeschwindigkeit $(c_m)$ in der radialen Entfernung $(X)$ von der Blattspitze nach radial innen bedeutet ( FIGUREN 7A, 7B, 7C, 7D ).

**14.** Hubtriebwerk nach Anspruch 12,
   dadurch gekennzeichnet,
daß das Verhältnis der Parameter wenigstens annähernd den Relativzahlenwerten folgender Tabelle entspricht ( FIGUREN 8B, 8D ) :

| | | | | | | |
|---|---|---|---|---|---|---|
| $r_f$ | 0.9308 | 0.9308 | 0.9308 | 0.9308 | 0.9308 | 0.9308 |
| $r$ | 0.3100 | 0.3100 | 0.3100 | 0.3100 | 0.3100 | 0.3100 |
| $v$ | 0.2149 | 0.2149 | 0.2149 | 0.2149 | 0.2149 | 0.2149 |
| $X$ | 0.1250 | 0.25 | 00 0.3750 | 0.5000 | 0.7500 | 0.9999 |
| $\alpha_i$ | 60.0000 | 60.0000 | 60.0000 | 60.0000 | 60.0000 | 60.0000 |
| $f1$ | 3.0000 | 3.0000 | 3.0000 | 3.0000 | 3.0000 | 3.0000 |
| $f2$ | 0.0200 | 0.0200 | 0.0200 | 0.0200 | 0.0200 | 0.0200 |
| $\Delta\alpha$ | 6.6947 | 11.0394 | 14.0548 | 16.2588 | 19.2518 | 21.1820 |
| $\Delta\alpha_{max.}$ | 21.1827 | 21.1827 | 211827 | 21.1827 | 21.1827 | 21.1827 |
| $\Delta\alpha_x$ | 67.7969 | 73.2437 | 77.3613 | 806674 | 85.8648 | 89.9985 |

| $r_{ix}$ | 0.9146 | 0.9061 | 0.9012 | 0.8981 | 0.8947 | 0.8929 |
|---|---|---|---|---|---|---|
| $r_{fx}$ | 0.8395 | 0.7481 | 0.6568 | 0.5654 | 0.3827 | 0.2001 |
| $m$ | 0.0751 | 0.1580 | 0.2444 | 0.3327 | 0.5120 | 0.6928 |
| $q$ | 0.0818 | 0.1670 | 0.2542 | 0.3425 | 0.5211 | 0.7011 |
| $r_x$ | 0.5768 | 0.8623 | 1.1856 | 1.5825 | 3.0763 | 5,921.5750 |
| $q_a$ | 0.0842 | 0.1749 | 0.2691 | 0.3651 | 0.5597 | 0.7550 |
| $C$ | 0.9538 | 0.9288 | 0.9146 | 0.9069 | 0.9034 | 0.9099 |
| $B$ | 0.2028 | 0.3663 | 0.5172 | 0.6607 | 0.9252 | 1.1309 |
| $A$ | 0.9019 | 0.8037 | 0.7056 | 0.6075 | 0.4112 | 0.2150 |
| $D$ | 0.9354 | 0.9044 | 0.8875 | 0.8776 | 0.8683 | 0.8660 |

$$\frac{c_{miv}}{c_{mix}} \quad 1.0927 \quad 1.2116 \quad 1.3616 \quad 1.5411 \quad 1.9787 \quad 2.4415$$

$$\frac{\tan \beta_{\infty i}}{\tan \beta_{\infty x}} \quad 0.9855 \quad 0.9738 \quad 0.9607 \quad 0.9361 \quad 0.8136 \quad 0.5249$$

wobei ($c_{miv}$) die Vertikalkomponente der größten, unter dem Winkel ($\alpha_i$) geneigten Meridiangeschwindigkeit ($c_i$) bedeutet ( FIGUREN 7B und 8B ) mit dem gesamten Funktionsverlauf der Komponenten ($c_{mv}$) über dem Blattradius und anderseits ($c_{mxv}$) die Vertikalkomponente einer beliebigen Meridiangeschwindigkeit ($c_m$) in der radialen Entfernung ($X$) von der Blattspitze nach radial innen bedeutet ( FIGUREN 8A, 8B, 8C, 8D ).

**15.** Hubtriebwerk nach Anspruch 12,
dadurch gekennzeichnet,
daß das Verhältnis der Parameter wenigstens annähernd den Relativzahlenwerten folgendener Tabelle entspricht ( FIGUREN 9B, 9D ) :

| $r_f$ | 0.8893 | 0.8893 | 0.8893 | 0.8893 | 0.8893 | 0.8893 |
| $r$ | 0.3100 | 0.3100 | 0.3100 | 0.3100 | 0.3100 | 0.3100 |
| $v$ | 0.2249 | 0.2249 | 0.2249 | 0.2249 | 0.2249 | 0.2249 |
| $X$ | 0.1250 | 0.2500 | 0.3750 | 0.5000 | 0.7500 | 0.9999 |
| $\alpha_i$ | 89.9990 | 89.9990 | 89.9990 | 89.9990 | 89.9990 | 89.9990 |
| $f1$ | 3.0000 | 3.0000 | 3.0000 | 3.0000 | 3.0000 | 3.0000 |
| $f2$ | 0.0200 | 0.0200 | 0.0200 | 0.0200 | 0.0200 | 0.0200 |
| $\Delta\alpha$ | 0.0002 | 0.0004 | 0.0005 | 0.0005 | 0.0006 | 0.0007 |
| $\Delta\alpha_{max.}$ | 0.0007 | 0.0007 | 0.0007 | 0.0007 | 0.0007 | 0.0007 |
| $\Delta\alpha_x$ | 89.9993 | 89.9994 | 89.9996 | 89.9987 | 89.9999 | 90.0000 |
| $r_{ix}$ | 0.8893 | 0.8893 | 0.8893 | 0.8893 | 0.8893 | 0.8893 |
| $r_{fx}$ | 0.8031 | 0.7170 | 0.6308 | 0.5447 | 0.3723 | 0.2001 |
| $m$ | 0.0862 | 0.1723 | 0.2585 | 0.3446 | 0.5170 | 0.6892 |
| $q$ | 0.0862 | 0.1723 | 0.2585 | 0.3446 | 0.5170 | 0.6892 |
| $r_x$ | 0.5812 | 0.8675 | 1.899 | 1.5845 | 3.0722 | 5,921.5631 |
| $q_a$ | 0.0862 | 0.1723 | 0.2585 | 0.3446 | 0.5170 | 0.6892 |
| $C$ | 1.0000 | 1.0000 | 1.0000 | 1.0000 | 1.0000 | 1.0000 |
| $B$ | 0.2131 | 0.3773 | 0.5255 | 0.6646 | 0.9180 | 1.1117 |
| $A$ | 0.9031 | 0.8062 | 0.7093 | 0.6125 | 0.4787 | 0.2250 |
| $D$ | 1.0000 | 1.0000 | 1.0000 | 1.0000 | 1.0000 | 1.0000 |

$$\frac{c_{miv}}{c_{mix}} \qquad 1.2375 \quad 1.4583 \quad 1.6914 \quad 1.9438 \quad 2.5042 \quad 3.0346$$

$$\frac{\tan \beta_{\infty i}}{\tan \beta_{\infty x}} \quad 1.1176 \quad 1.1757 \quad 1.1997 \quad 1.1905 \quad 1.0484 \quad 0.6838$$

wobei ($c_{miv}$) die Vertikalkomponente der größten, unter dem Winkel ($\alpha_i$) geneigten Meridiangeschwindigkeit ($c_i$) bedeutet ( FIGUREN 7B, 8B, 9B ) mit dem gesamten Funktionsverlauf der Komponenten ($c_{mv}$) über dem Blattradius und anderseits ($c_{mxv}$) die Vertikalkomponente einer beliebigen Meridiangeschwindigkeit ($c_m$) in der radialen Entfernung ($X$) von der Blattspitze nach radial innen bedeutet ( FIGUREN 9A, 9B, 9C, 9D ).

16. Hubtriebwerk nach Anspruch 11,
   dadurch gekennzeichnet,
   daß bei einem rotationssymmetrisch gekrümmten Einlaufkanal der radiale Verlauf der Profilanstellwinkel ($\beta$) der Rotorblätter ( 3 ) folgender Beziehung wenigstens annähernd genügt:
   Der Tangens des äußersten Profilwinkels ($\beta_{\infty i}$) der Rotorblätter, allenfalls der ersten Stufe, verhält sich zum Tangens des Profilwinkels ($\beta_{\infty x}$) weiter radial innen in der relativen Entfernung ($X$) von außen wie

$$\frac{\tan\beta_{\infty i}}{\tan\beta_{\infty x}} = (1 - X(1-v))\, e^{B'}\,,$$

wobei da gilt

$$\frac{\tan\beta_i}{\tan\beta_x} \approx \frac{\tan\beta_{\infty i}}{\tan\beta_{\infty i}}$$

und

$$B' = 0.5\, X\, r_f\, (1-v)\left(\frac{1}{r} + \frac{1}{r + (R-r)(X + f_3 \sin(X\,180))}\right)$$

with

$r_f$ = Gebläserotoraußenradius

$r$ = Meridiankrümmungsradius außen, gegenüber der Gebläserotorblattspitze

$R$ = Meridiankrümmungsradius innen an der Nabe

$v$ = Nabenverhältnis =

$$\frac{r_n}{r_f}$$

$f_3$ = 0.2

bedeuten und wobei vorzugsweise der Außenmeridian-Tangentenwinke ($\alpha_i$) etwa 77° bis 90° beträgt.

**17.** Hubtriebwerk nach Anspruch 16,
dadurch gekennzeichnet,
daßdas Verhältnis der Parameter wenigstens annähernd den Relativzahlenwerten folgender Tabelle entspricht ( FIGUREN 14D, 14F ) :

|  | | | | | | | |
|---|---|---|---|---|---|---|---|
| $r_f$ | | | | | | | |
| r | 0.4100 | 0.4100 | 0.4100 | 0.4100 | 0.4100 | 0.4100 | 0.4100 |
| R | 0.8600 | 0.8600 | 0.8600 | 0.8600 | 0.8600 | 0.8600 | 0.8600 |
| X | 0.0000 | 0.1250 | 0.2500 | 0.3750 | 0.5000 | 0.7500 | 1.0000 |
| v | 0.3000 | 0.3000 | 0.3000 | 0.3000 | 0.3000 | 0.3000 | 0.3000 |
| f3 | 0.2000 | 0.2000 | 0.2000 | 0.2000 | 0.2000 | 0.2000 | 0.2000 |
| A | 1.0000 | 0.9125 | 0.8250 | 0.7375 | 0.6500 | 0.4650 | 0.3000 |
| $r_X$ | 0.4100 | 0.5007 | 0.5861 | 0.6619 | 0.7250 | 0.8111 | 0.8600 |
| B | 0.0000 | 0.1941 | 0.3627 | 0.5184 | 0.6682 | 0.9639 | 1.2605 |
| $\dfrac{c_{mi}}{c_{mx}}$ | 1.0000 | 1.2142 | 1.4372 | 1.6794 | 1.9507 | 2.6218 | 3.5277 |
| $\dfrac{\tan\beta_{\infty i}}{\tan\beta_{\infty x}}$ | 1.0000 | 1.1080 | 1.1857 | 1.2385 | 1.2680 | 1.2454 | 1.0583 |

wobei ($c_{mi}$) der Größtwert der axialen Meridiangeschwindigkeit ($c_m$) am Fan-Außenradius ($r_f$) ist und ($c_{mx}$) der entsprechende Wert in der relativen Entfernung ($X$) von der Blattspitze nach radial innen.

18. Hubtriebwerk nach Anspruch 16,
dadurch gekennzeichnet,
daß das Verhältnis der Parameter wenigstens annähernd den Relativzahlenwerten folgender Tabelle entspricht:

| | | | | | | | |
|---|---|---|---|---|---|---|---|
| $r_f$ | 1.0000 | 1.0000 | 1.0000 | 1.0000 | 1.0000 | 1.0000 | 1.0000 |
| $r$ | 0.3100 | 0.3100 | 0.3100 | 0.3100 | 0.3100 | 0.3100 | 0.3100 |
| $R$ | 0.8600 | 0.8600 | 0.8600 | 0.8600 | 0.8600 | 0.8600 | 0.8600 |
| $X$ | 0.0000 | 0.1250 | 0.2500 | 0.3750 | 0.5000 | 0.7500 | 1.0000 |
| $v$ | 0.3000 | 0.3000 | 0.3000 | 0.3000 | 0.3000 | 0.3000 | 0.3000 |
| $f_3$ | 0.2000 | 0.2000 | 0.2000 | 0.2000 | 0.2000 | 0.2000 | 0.2000 |
| $A$ | 1.0000 | 0.9125 | 0.8250 | 0.7375 | 0.6500 | 0.4750 | 0.3000 |
| $r_x$ | 0.3100 | 0.4208 | 0.5253 | 0.6179 | 0.6950 | 0.8003 | 0.8600 |
| $B$ | 0.0000 | 0.2451 | 0.4488 | 0.6358 | 0.8163 | 1.1748 | 1.5360 |
| $\dfrac{c_{mi}}{c_{mx}}$ | 1.0000 | 1.2777 | 1.5665 | 1.8885 | 2.2621 | 3.2374 | 4.6460 |
| $\dfrac{\tan\beta_{\infty i}}{\tan\beta_{\infty x}}$ | 1.0000 | 1.1659 | 1.2924 | 1.3928 | 1.4704 | 1.5358 | 1.3938 |

wobei ($c_{mi}$) der Größtwert der axialen Meridiangeschwindigkeit ($c_m$) am Fan-Außenradius ($r_f$) ist und ($c_{mx}$) der entsprechende Wert in der relativen Entfernung ($X$) von der Blattspitze nach radial innen.

## Claims

1. A lift jet engine, either usable as an independent aircraft or as an additional lift engine in an aircraft nacelle, with a convexly curved inlet fairing (7) of rotational symmetry shrouding an axial compressor (f) with rotor blades (3), which generate a difference of total pressures between the upstream inlet side and the downstream exit side of the fan,
   characterized
   by a gap of less than 1/25 of the fan rotor outside diameter between said diameter and the shrouding fairing, and a ratio of the mean blade angle ($\beta_m$) - defined as the angle between the profile chord line and the circumferential direction of rotation on a station of ($0.5l$) of the blade length ($l$) - in relation to blade angle difference ($\Delta\beta_1$) - defined in the medium range ($0.5l \pm 0.25l$) of the blade length ($l$) -said ratio ranging from a minimum of 3.8 up to 12, preferably being 8 to 12.

2. A lift engine according to claim 1,
   characterized
   by a radial distribution of the specific energy transfer ( $h_u$ ) - defined as the supplied energy per kg air passing the fan rotor, said $h_u$ being proportional to the difference of total pressures between the inlet side and the exit side - where said radial distribution increases for a multiple of at least 1.5 times up to 10 times, preferably ranging between 3 to 10 times from hub to tip of the rotor blades.

3. A lift engine according to claim 1 or 2
   characterized
   by a tangent angle ($\alpha_i$) of the inlet fairing between 50° and 90° and where the relative increase of the blade angle ($\beta$), outgoing from a mean radial range of ($0.5l \pm 0.25l$) towards outer radii will be between 0° and 20°, preferably between 0° and 9° ( FIGS. 8D, 9D and 14D ).

4. A lift engine according to one of the preceding claims,
   characterized

by the feature that in case of a multistage axial compressor the radial increment of the blade angle ($\beta$) from a mean radial range towards the rotor tip radius ,will be a positive value at the first stage and will change to smaller increments throughout the stages and might change even to a negative value at the last stages where the blade angle plotted over the radius of the rotor blade ( 3 ) shows a function without turning points at the last stage and where the rotors of adjacent stages in the multi stage compressor might have opposite directions of rotations ( FIG. 17A ).

5. A lift engine according to one of the preceding claims,
characterized
by a radial expansion of the rotational symmetry of the convexly curved inlet fairing ( 7 ) up to a place with a radius of 1.2 until 1.5 times of the rotor tip radius ( $r_f$ ) of the fan ( f )- where the tangent of the fairing curvature must not have a horizontal position in said place - and said rotational symmetry of the fairing( 7 ) curvature is ending downstream of the fan rotor cascade in distance of 0.1 until 0.3 times of ( $r_f$ ), preferably until 0.2 times of ( $r_f$ ).

6. A lift engine according to one of the preceding claims,
characterized
a) that in case of an open inlet, that means free of free of subdividing inlet shields ( 17 ), the rotor blades are located as high above the most small radius ( $r_{k\ min}$ ) of the torus like inlet fairing ( 7 ), that the tangent angle ($\alpha_i$) -measured against a horizontal plane- will be 40° to 70°, preferably 40° to 60° or
b) in case of a curved inlet flowpath with rotational symmetry and occasional guide shields ( 17 ), said angle ($\alpha_i$) will range from 55° to 90°, preferably from 70° to 90° .

7. A lift engine according to one of the preceding claims,
characterized
by the feature that the exit channel downstream of the fan( f ) is split into at least two separate channels, which cross section deviates from the circular shape and from circular symmetry ( FIGS. 14A, 14B ).

8. A lift engine according to one of the preceding claims,
characterized
by a fan rotor( f ) with blades ( 3 ), which blade angle ($\beta$) will be controllable in a cyclic and collective manner by means of suitable devices and that there are guide vanes ( 26 , 10A ) arranged downstream of the fan rotor.

9. A lift engine according to one of the preceding claims,
characterized
by a split of at least a part of the rotor blades ( 3A, 3B ) by means of a ring ( 49 ) in coaxial position to the rotor axis where at least one of the following features is applied:
a) The number of rotor blades ( 3B ) within the ring ( 49 ) is less, than the number of rotor blades ( 3A ) outside of this ring,
b) the rotor blades ( 3B) within the ring ( 49 ) have a rigid pitch position whereas rotor blades ( 3A ) outside of the ring ( 49 ) will have a cyclic and ( or ) collective control for the position of the blade angle
c) and the radial increase from hub to tip of the difference of the total pressures between the inlet side and the exit side will expand over the entire length of the rotor blades ( length of ( 3A ) plus length of ( 3B ) ) with a corresponding distribution of the blade angle ($\beta$) over the blade length.

10. A lift engine according to one of the preceding claims,
characterized
by radially expanding guide vanes ( 26 ) or rudders downstream of the rotor , which have blade angles - defined as the inclination of the profile chord line against the circumferential direction of rotation- with a proportional radial distribution like the corresponding angles ($\beta$) of the rotor blades ( 3 ).

11. A lift engine according to one of the preceding claims ,
characterized,
by a ratio of the tangent function of the profile blade angle ($\beta$) at the outermost radius of the rotor blades ( 3 ) in relation to a blade angle ($\beta$) in a relative distance X from the outermost radius towards an inner radius that is described at least approximately by the following formula:

$$\frac{\tan \beta_i}{\tan \beta_x} = A \; e^B \; C'$$

where there is

$\beta_i$ = angle of the profile chord line at the outermost radius of the rotor blade,

$\beta_x$ = angle of the profile chord length in a relative distance X ranging from the outermost blade end towards the radius of the hub,

A = the expression 1 - $X$ (1 - $\nu$) with

$\nu$ = hub/tip ratio

$$= \frac{hub \; radius}{blade \; tip \; radius}$$

and where

B and C' are geometry factors, dependent from the curvature radius of the inlet fairing in place opposed to the tip of the rotor blade, furthermore from the fan tip radius and from the tangent angle ($\alpha_i$) of the inlet fairing on a place opposed to the rotor tip and where the rotor hub radius ( $r_n$ ) is defined in the plane of the blade axis.

**12.** A lift engine according to claim 11,
characterized
by a radial distribution of profile angles ($\beta$) and ($\beta_\infty$) - both angles standing in close proportion to each other - of the rotor blades ( 3 ) of a single stage axial compressor or at least of the first stages of a multi stage compressor, which follows approximately to a relationship given below:
For lift engines with an open unshielded inlet port upstream of the fan , the ratio of the tangent of the outermost blade angle ($\beta_{\infty i}$) in relation to the tangent of the profile angle ($\beta_{\infty x}$) in the relative distance X from radial outside towards inner radii will be :

$$\frac{\tan \beta_{\infty i}}{\tan \beta_{\infty x}} = A \; e^B \; C \; D$$

where there is

$$\frac{\tan \beta_i}{\tan \beta_x} \approx \frac{\tan \beta_{\infty i}}{\tan \beta_{\infty x}}$$

with the auxiliary functions

$$\Delta \alpha \;=\; a\tan \frac{X\, r_f\,(1-v)\cos \alpha_i}{r + r_f\,(1-v)\sin \alpha_i}$$

$$\Delta \alpha_{max.} \;=\; a\tan \frac{r_f\,(1-v)\cos \alpha_i}{r + r_f\,(1-v)\sin \alpha_i}$$

$\alpha_x = \alpha_i + \Delta\alpha + X(90-\alpha_i-\Delta\alpha_{max.})$

$r_{ix} = r_f - r(\cos(90-\alpha_i-\Delta\alpha)-\cos(90-\alpha_i))$

$r_{fx} = r_f(1-X(1-v))$

$$m \;=\; r_{ix} - r_{fx} \qquad q \;=\; \frac{m}{\cos(90-\alpha_i-\Delta\alpha)}$$

$r_x = r(1 + f_1 \tan(X90)) + q$

$$q_a \;=\; \left(\frac{r+q}{\cos\Delta\alpha} - r\right)\left(1 - \left(\frac{f_2}{(\frac{\alpha_i}{90})^2} - f_2\right) X\right)$$

$$C \;=\; \frac{q\left[\,r_f\,(1-X(1-v)) + \dfrac{m}{2}\,\right]}{q_a\,(\,r_f - 0.5\,q_a\cos(90-\alpha_i-(0.5+X\,0.5)\Delta\alpha)\,)}$$

$$B \;=\; 0.5\,q\left(\frac{1}{r} + \frac{1}{r_x}\right)$$

$A = 1-X(1-v)$

$$D \;=\; \frac{\sin \alpha_i}{\sin \alpha_x}$$

where there means

$\alpha_i$ = angle of meridional contour opposed to $r_f$

r = curvature radius of the meridional contour opposed to $r_f$

$r_f$ = tip radius of the fan rotor

$v$ = hub/ tip ratio

$$\left(\; =\; \frac{r_n}{r_f}\;\right)$$

28

$f_1$ = 3, $f_2$ = 0.02

e = base of natural logarithm

**13.** A lift engine according to claim 12 characterized by a ratio of parameters, at least approximating the relative numbers of the table below ( FIGS. 7B, 7D ) :

| | | | | | | |
|---|---|---|---|---|---|---|
| $r_f$ | 1.0000 | 1.0000 | 1.0000 | 1.0000 | 1.0000 | 1.0000 |
| $r$ | 0.3100 | 0.3100 | 0.3100 | 0.3100 | 0.3100 | 0.3100 |
| $v$ | 0.2000 | 0.2000 | 0.2000 | 0.2000 | 0.2000 | 0.2000 |
| $X$ | 0.1250 | 0.2500 | 0.3750 | 0.5000 | 0.7500 | 0.9999 |
| $\alpha_i$ | 40.0000 | 40.0000 | 40.0000 | 40.0000 | 40.0000 | 40.0000 |
| f1 | 3.0000 | 3.0000 | 3.0000 | 3.0000 | 3.0000 | 3.0000 |
| f2 | 0.0200 | 0.0200 | 0.0200 | 0.0200 | 0.0200 | 0.0200 |
| $\Delta\alpha$ | 11.5571 | 19.2567 | 24.5520 | 28.3828 | 33.4525 | 36.6307 |
| $\Delta\alpha_{max.}$ | 36.6317 | 36.6317 | 36.6317 | 36.6317 | 36.6317 | 36.6317 |
| $\Delta\alpha_x$ | 53.2381 | 62.5988 | 69.5751 | 75.0669 | 83.4787 | 89.9976 |
| $r_{ix}$ | 0.9564 | 0.9328 | o.9193 | 0.9111 | 0.9021 | 0.8977 |
| $r_{fx}$ | 0.9000 | 0.8000 | 0.7000 | 0.6000 | 0.4000 | 0.2001 |
| m | 0.0564 | 0.1328 | 0.2193 | 0.3111 | 0.5021 | 0.6976 |
| q | 0.0720 | 0.1545 | 0.2429 | 0.3346 | 0.5238 | 0.7170 |
| $r_x$ | 0.5670 | 0.8498 | 1.1743 | 1.5746 | 3.0790 | 5,921.5908 |
| $q_a$ | 0.0791 | 0.1784 | 0.2888 | 0.4055 | 0.6473 | 0.8910 |
| C | 0.8698 | 0.8074 | 0.7746 | 0.7583 | 0.7555 | 0.7796 |
| B | 0.1797 | 0.3402 | 0.4951 | 0.6459 | 0.9299 | 1.1565 |
| A | 0.9000 | 0.8000 | 0.7000 | 0.6000 | 0.4000 | 0.2001 |
| D | 0.8024 | 0.7240 | 0.6859 | 0.6653 | 0.6470 | 0.6428 |
| $\dfrac{c_{miv}}{c_{mxv}}$ | 0.8353 | 0.8215 | 0.8717 | 0.9623 | 1.2387 | 1.5930 |
| $\dfrac{\tan\beta_{\infty i}}{\tan\beta_{\infty x}}$ | 0.7518 | 0.6572 | 0.6102 | 0.5774 | 0.4955 | 0.3187 |

where ($c_{miv}$) means the vertical component of the most large meridional velocity ($c_i$), inclined under the angle ($\alpha_i$) ( FIGS. 7B and 8B ), and ($c_{mvx}$) means a value out of the overall ($c_{mv}$)- distribution in a radial distance ( X ) from the blade tip towards inner radii ( FIGS. 7A, 7B, 7C, 7D ).

**14.** A lift engine according to claim 12 characterized by a ratio of parameters, at least approximating the relative numbers of the table below ( FIGS. 8B, 8D ) :

| | | | | | | |
|---|---|---|---|---|---|---|
| $r_f$ | 0.9308 | 0.9308 | 0.9308 | 0.9308 | 0.9308 | 0.9308 |
| $r$ | 0.3100 | 0.3100 | 0.3100 | 0.3100 | 0.3100 | 0.3100 |
| $v$ | 0.2149 | 0.2149 | 0.2149 | 0.2149 | 0.2149 | 0.2149 |
| $X$ | 0.1250 | 0.25 | 00  0.3750 | 0.5000 | 0.7500 | 0.9999 |
| $\alpha_i$ | 60.0000 | 60.0000 | 60.0000 | 60.0000 | 60.0000 | 60.0000 |
| $f1$ | 3.0000 | 3.0000 | 3.0000 | 3.0000 | 3.0000 | 3.0000 |
| $f2$ | 0.0200 | 0.0200 | 0.0200 | 0.0200 | 0.0200 | 0.0200 |
| | | | | | | |
| $\Delta\alpha$ | 6.6947 | 11.0394 | 14.0548 | 16.2588 | 19.2518 | 21.1820 |
| $\Delta\alpha_{max.}$ | 21.1827 | 21.1827 | 211827 | 21.1827 | 21.1827 | 21.1827 |
| $\Delta\alpha_x$ | 67.7969 | 73.2437 | 77.3613 | 806674 | 85.8648 | 89.9985 |
| $r_{ix}$ | 0.9146 | 0.9061 | 0.9012 | 0.8981 | 0.8947 | 0.8929 |
| $r_{fx}$ | 0.8395 | 0.7481 | 0.6568 | 0.5654 | 0.3827 | 0.2001 |
| $m$ | 0.0751 | 0.1580 | 0.2444 | 0.3327 | 0.5120 | 0.6928 |
| $q$ | 0.0818 | 0.1670 | 0.2542 | 0.3425 | 0.5211 | 0.7011 |
| $r_x$ | 0.5768 | 0.8623 | 1.1856 | 1.5825 | 3.0763 | 5,921.5750 |
| $q_a$ | 0.0842 | 0.1749 | 0.2691 | 0.3651 | 0.5597 | 0.7550 |
| $C$ | 0.9538 | 0.9288 | 0.9146 | 0.9069 | 0.9034 | 0.9099 |
| $B$ | 0.2028 | 0.3663 | 0.5172 | 0.6607 | 0.9252 | 1.1309 |
| $A$ | 0.9019 | 0.8037 | 0.7056 | 0.6075 | 0.4112 | 0.2150 |
| $D$ | 0.9354 | 0.9044 | 0.8875 | 0.8776 | 0.8683 | 0.8660 |
| $\dfrac{c_{miv}}{c_{mix}}$ | 1.0927 | 1.2116 | 1.3616 | 1.5411 | 1.9787 | 2.4415 |
| $\dfrac{\tan \beta_{\infty i}}{\tan \beta_{\infty x}}$ | 0.9855 | 0.9738 | 0.9607 | 0.9361 | 0.8136 | 0.5249 |

where ($c_{miv}$) means the vertical component of the most large meridional velocity ($c_i$), inclined under the angle ($\alpha_i$) ( FIGS. 7B and 8B ), and ($c_{mvx}$) means a value out of the overall ($c_{mv}$)- distribution in a radial distance ( $X$ ) from the blade tip towards inner radii ( FIGS. 8A 8B, 8C, 8D ).

**15.** a lift engine according to claim 12,
    characterized
    by a ratio of parameters, at least approximating the relative numbers of the table below ( FIGS. 9B, 9D )
    :

| $r_f$ | 0.8893 | 0.8893 | 0.8893 | 0.8893 | 0.8893 | 0.8893 |
|---|---|---|---|---|---|---|
| $r$ | 0.3100 | 0.3100 | 0.3100 | 0.3100 | 0.3100 | 0.3100 |
| $v$ | 0.2249 | 0.2249 | 0.2249 | 0.2249 | 0.2249 | 0.2249 |
| $X$ | 0.1250 | 0.2500 | 0.3750 | 0.5000 | 0.7500 | 0.9999 |
| $\alpha_i$ | 89.9990 | 89.9990 | 89.9990 | 89.9990 | 89.9990 | 89.9990 |
| $f1$ | 3.0000 | 3.0000 | 3.0000 | 3.0000 | 3.0000 | 3.0000 |
| $f2$ | 0.0200 | 0.0200 | 0.0200 | 0.0200 | 0.0200 | 0.0200 |
| | | | | | | |
| $\Delta\alpha$ | 0.0002 | 0.0004 | 0.0005 | 0.0005 | 0.0006 | 0.0007 |
| $\Delta\alpha_{max.}$ | 0.0007 | 0.0007 | 0.0007 | 0.0007 | 0.0007 | 0.0007 |
| $\Delta\alpha_X$ | 89.9993 | 89.9994 | 89.9996 | 89.9987 | 89.9999 | 90.0000 |
| $r_{ix}$ | 0.8893 | 0.8893 | 0.8893 | 0.8893 | 0.8893 | 0.8893 |
| $r_{fx}$ | 0.8031 | 0.7170 | 0.6308 | 0.5447 | 0.3723 | 0.2001 |
| $m$ | 0.0862 | 0.1723 | 0.2585 | 0.3446 | 0.5170 | 0.6892 |
| $q$ | 0.0862 | 0.1723 | 0.2585 | 0.3446 | 0.5170 | 0.6892 |
| $r_X$ | 0.5812 | 0.8675 | 1.899 | 1.5845 | 3.0722 | 5,921.5631 |
| $q_a$ | 0.0862 | 0.1723 | 0.2585 | 0.3446 | 0.5170 | 0.6892 |
| $C$ | 1.0000 | 1.0000 | 1.0000 | 1.0000 | 1.0000 | 1.0000 |
| $B$ | 0.2131 | 0.3773 | 0.5255 | 0.6646 | 0.9180 | 1.1117 |
| $A$ | 0.9031 | 0.8062 | 0.7093 | 0.6125 | 0.4787 | 0.2250 |
| $D$ | 1.0000 | 1.0000 | 1.0000 | 1.0000 | 1.0000 | 1.0000 |
| $\dfrac{c_{mi v}}{c_{mi x}}$ | 1.2375 | 1.4583 | 1.6914 | 1.9438 | 2.5042 | 3.0346 |
| $\dfrac{\tan \beta_{\infty i}}{\tan \beta_{\infty x}}$ | 1.1176 | 1.1757 | 1.1997 | 1.1905 | 1.0484 | 0.6838 |

where ($c_{mi v}$) means the vertical component of the most large meridional velocity ($c_i$), inclined under the angle ($\alpha_i$) ( FIGS. 7B and 8B ), and ($c_{m v x}$) means a value out of the overall ($c_{m v}$)- distribution in a radial distance ( X ) from the blade tip towards inner radii ( FIGS. 9A, 9B, 9C, 9D ).

**16.** A lift engine according to claim 11,
characterized
by a curved inlet flowpath of rotational symmetry with a radial distribution of the blade angle ($\beta$) of the rotor blades ( 3 ), which follws approximately to the relationship given below :
The tangent of the blade angle ($\beta_{\infty i}$) of the outermost profile of the rotor blades of at least the first stage, has a ratio to the tangent of a profile blade angle ($\beta_{\infty x}$) at a relative distance X from the tip towards inner radii, as follows :

$$\frac{\tan\beta_{\infty i}}{\tan\beta_{\infty x}} = (1 - X(1 - \nu))\, e^{B'} \, ,$$

where there is

$$\frac{\tan\beta_i}{\tan\beta_x} \approx \frac{\tan\beta_{\infty i}}{\tan\beta_{\infty i}}$$

and

$$B' = 0.5\, X\, r_f\, (1 - \nu)\, \left(\frac{1}{r} + \frac{1}{r + (R - r)(X + f_3 \sin(X\,180))}\right)$$

with

$r_f$ = fan tip radius

$r$ = curvature radius of the meridional contour opposed to the fan tip

$R$ = curvature radius of the meridional contour at the hub

$\nu$ = hub/tip ratio =

$$\frac{r_n}{r_f}$$

$f_3$ = 0.2

and where the tangent angle $\alpha_i$ of the outside meridional contour will have an amount from about 77° until 90°.

**17.** A lift engine according to claim 16
characterized
by a ratio of parameters, at least approximating the relative numbers of the table below ( FIGS. 14D, 14F ) :

| | | | | | | | |
|---|---|---|---|---|---|---|---|
| $r_f$ | 1.0000 | 1.0000 | 1.0000 | 1.0000 | 1.0000 | 1.0000 | 1.0000 |
| $r$ | 0.4100 | 0.4100 | 0.4100 | 0.4100 | 0.4100 | 0.4100 | 0.4100 |
| $R$ | 0.8600 | 0.8600 | 0.8600 | 0.8600 | 0.8600 | 0.8600 | 0.8600 |
| $X$ | 0.0000 | 0.1250 | 0.2500 | 0.3750 | 0.5000 | 0.7500 | 1.0000 |
| $\nu$ | 0.3000 | 0.3000 | 0.3000 | 0.3000 | 0.3000 | 0.3000 | 0.3000 |
| $f3$ | 0.2000 | 0.2000 | 0.2000 | 0.2000 | 0.2000 | 0.2000 | 0.2000 |
| $A$ | 1.0000 | 0.9125 | 0.8250 | 0.7375 | 0.6500 | 0.4650 | 0.3000 |
| $r_X$ | 0.4100 | 0.5007 | 0.5861 | 0.6619 | 0.7250 | 0.8111 | 0.8600 |
| $B$ | 0.0000 | 0.1941 | 0.3627 | 0.5184 | 0.6682 | 0.9639 | 1.2605 |
| $\dfrac{c_{mi}}{c_{mx}}$ | 1.0000 | 1.2142 | 1.4372 | 1.6794 | 1.9507 | 2.6218 | 3.5277 |
| $\dfrac{\tan\beta_{\infty i}}{\tan\beta_{\infty x}}$ | 1.0000 | 1.1080 | 1.1857 | 1.2385 | 1.2680 | 1.2454 | 1.0583 |

where ( $c_{mi}$ ) is the maximum value of the axial meridional velocity ( $c_m$ ) at the fan tip radius ( $r_f$ ) and ( $c_{mx}$ ) will be the corresponding value in the relative distance X from the blade tip towards inner radii.

18. A lift engine according to claim 16
      characterized
      by a ratio of parameters, at least approximating the relative numbers of the table below :

| $r_f$ | 1.0000 | 1.0000 | 1.0000 | 1.0000 | 1.0000 | 1.0000 | 1.0000 |
|---|---|---|---|---|---|---|---|
| r | 0.3100 | 0.3100 | 0.3100 | 0.3100 | 0.3100 | 0.3100 | 0.3100 |
| R | 0.8600 | 0.8600 | 0.8600 | 0.8600 | 0.8600 | 0.8600 | 0.8600 |
| X | 0.0000 | 0.1250 | 0.2500 | 0.3750 | 0.5000 | 0.7500 | 1.0000 |
| v | 0.3000 | 0.3000 | 0.3000 | 0.3000 | 0.3000 | 0.3000 | 0.3000 |
| f3 | 0.2000 | 0.2000 | 0.2000 | 0.2000 | 0.2000 | 0.2000 | 0.2000 |
| | | | | | | | |
| A | 1.0000 | 0.9125 | 0.8250 | 0.7375 | 0.6500 | 0.4750 | 0.3000 |
| $r_x$ | 0.3100 | 0.4208 | 0.5253 | 0.6179 | 0.6950 | 0.8003 | 0.8600 |
| B | 0.0000 | 0.2451 | 0.4488 | 0.6358 | 0.8163 | 1.1748 | 1.5360 |
| $\dfrac{c_{mi}}{c_{mx}}$ | 1.0000 | 1.2777 | 1.5665 | 1.8885 | 2.2621 | 3.2374 | 4.6460 |
| $\dfrac{\tan\beta_{\infty i}}{\tan\beta_{\infty x}}$ | 1.0000 | 1.1659 | 1.2924 | 1.3928 | 1.4704 | 1.5358 | 1.3938 |

where ($c_{mi}$) is the maximum value of the axial meridional velocity ($c_m$) at the fan tip radius ($r_f$) and ($c_{mx}$) will be the corresponding value in the relative distance X from the blade tip towards inner radii.

**Revendications**

1. Propulseur de levage indépendant ou insérable dans un aéronef, comme dispositif auxiliaire, avec un bourrelet d'entrée (7), bombé de façon convexe et à symétrie de rotation, autour d'une soufflante axiale (A) équipée de pales de rotor (3), produisant, dans l'état de marche, une différence de pression globale entre le côté supérieur d'entrée de l'écoulement et le côté inférieur de sortie de l'écoulement, caractérisé en ce que, dans le cas d'un interstice d'une valeur inférieure à 1/25 du diamètre extérieur du rotor de la soufflante par rapport au bourrelet de pourtour, le rapport entre l'angle d'attaque moyen ($\beta_m$) défini comme étant l'angle de la corde du profil des pales de rotor par rapport à la direction de rotation périphérique dans la région de la moitié (0,5 l) de la longueur de pale (l) par rapport à l'angle de différence-angle d'attaque $\Delta\beta$1), défini comme la différence d'angle entre la région médiane (0,5 l) ± un quart (0,25 l) de la longueur de pale (l) est d'au moins 3,8, de préférence compris entre 8 et 12.

2. Propulseur de levage selon la revendication 1, caractérisé en ce que la distribution radiale de l'énergie spécifique ($h_u$), définie comme étant l'apport énergétique par kg d'air passé dans la soufflante, qui est proportionnelle à la différence de pression totale entre le côté d'entrée d'écoulement et le côté de sortie d'écoulement, augmente, depuis le moyeu des pales de rotor jusqu'à la pointe de pale, d'au moins 1,5 fois, de préférence de plus de 3 fois, jusqu'à atteindre 10 fois (figures 7C, 8C, 9C, 14E).

3. Propulseur de levage selon la revendication 1 ou 2, caractérisé en ce que l'angle de tangente ($\alpha_i$) du bourrelet est situé entre 50° et 90° et l'angle d'attaque ($\beta$)de la corde de profil par rapport à la direction de rotation périphérique, en partant d'une région médiane radiale de la longueur (l) de pale de rotor de 0,5 l ± 0,25 l, augmente radialement vers l'extérieur, d'une valeur située de préférence entre 0 et 20 de préférence entre 0 et 9 degrés d'angle (figures 8D, 9D, et 14D).

4. Propulseur de levage selon l'une des revendications précédentes, caractérisé en ce que, dans le cas d'une soufflante axiale à plusieurs étages, la variation de l'angle de corde de profil ($\beta$) diminue depuis

la région médiane, radialement vers l'extérieur, depuis une valeur positive du premier étage, pour l'étage venant chaque fois ensuite, le cas échéant jusqu'à atteindre une valeur négative lorsque le nombre d'étages augmente, l'évolution des angles en fonction du rayon de la pale de rotor (3) étant au moins exempte de point d'inversion dans le dernier étage de soufflante, et en ce que, le cas échéant, le sens de rotation d'étages mutuellement voisins est mutuellement opposé (figures 17A).

5. Propulseur de levage selon l'une des revendications précédentes, caractérisé en ce que le bombement convexe à symétrie de rotation du bourrelet d'entrée (7) - la tangente à partir de laquelle le bombement commence ne doit pas être horizontale - commence à une distance qui correspond à 1,2 à 1,5 fois, de préférence de 1,3 à 1,4 fois le rayon extérieur ($r_f$) du rotor de soufflante (f), et/ou en ce que le bombement convexe, à symétrie de rotation, du bourrelet d'entrée (7) s'achève à une distance de la couronne de pale de rotor tournée vers le côté supérieur d'entrée d'écoulement, qui correspond à 0,1 à 0,3 fois, de préférence à environ 0,2 fois le rayon extérieur ($r_f$) du rotor de soufflante (f).

6. Propulseur de levage selon l'une des revendications précédentes, caractérisé en ce que soit
   a) la couronne de pale de rotor est située au-dessus du diamètre intérieur minimal ($r_{K\ min}$) du bourrelet d'entrée (7) toroïdal, de manière que l'angle de tangente ($\alpha_i$) cité - mesuré par rapport à un plan horizontal - soit de 30° à 70°, de préférence de 40° à 60°, le côté entrée étant ouvert et exempt de volute d'entrée de subdivision (17); soit
   b) dans le cas d'un canal d'entrée incurvé, à symétrie de rotation, l'angle est de 55° à 90° de préférence de 70° à 90°, des volutes de diffuseurs 17 étant le cas échéant prévues côté entrée.

7. Propulseur de levage selon l'une des revendications précédentes, caractérisé en ce que le canal de sortie est divisé, côté aval de l'écoulement de la soufflante (f), en au moins deux canaux (43), dont la section transversale perpendiculairement par rapport à l'axe de la soufflante (34) s'écarte, de manière appropriée, de la forme circulaire et également de la forme circulaire à symétrie de rotation (figures 14A, 14B).

8. Propulseur de levage selon l'une des revendications précédentes, caractérisé en ce que le rotor de la soufflante (f) est pourvu de pales de rotor (3), dont l'angle de corde de profil ($\beta$) est réglable, à l'aide d'un dispositif de réglage, de façon cyclique et collective, et en ce que, de préférence en aval de l'écoulement de ce rotor, sont prévues des aubes directrices (26, 10A) réglables de façon synchrone avec les pales de rotor (3), orientées sensiblement vers l'aval, et en ce que le cas échéant sont prévues des gouvernes (10) ou analogues.

9. Propulseur de levage selon l'une des revendications précédentes, caractérisé en ce qu'au moins une partie des pales de rotor (3A, 3B) est subdiviséee au moyen d'un anneau (49) coaxial par rapport à l'axe de rotor, et en ce qu'au moins l'une des caractéristiques suivantes est prévue:
   a) le nombre des pales de rotor (3B) à l'intérieur de l'anneau (49) est inférieur au nombre des pales de rotor (3A) au côté extérieur de l'anneau;
   b) les pales de rotor (3B) sont réalisées rigides à l'intérieur de l'anneau (49), alors que, par contre, les pales de rotor (3A), situées à l'extérieur de l'anneau (49), sont réglables collectivement de façon cyclique et (ou) collectivement, en vue de modifier leurs angles d'attaque;
   c) sur la totalité de la longueur des pales de rotor (longueur de (3A) plus longueur de (3B)) l'évolution de la valeur de l'angle d'attaque ($\beta$), depuis radialement à l'intérieur jusqu'à radialement à l'extérieur, est choisie de manière correspondante à une augmentation de la différence de pression totale entre le côté supérieur d'entrée d'écoulement et le côté inférieur de sortie d'écoulement, dans la direction allant de radialement à l'intérieur à radialement vers l'extérieur.

10. Propulseur de levage selon l'une des revendications précédentes, caractérisé en ce qu'en aval de l'écoulement du rotor sont prévues des aubes directrices (26), une gouverne ou analogues, s'étendant radialement, dont l'angle d'incidence de la corde de profil, par rapport à la direction de rotation périphérique, varie en fonction du rayon, de préférence dans une mesure amoindrie, et de manière correspondant a l'évolution radiale de l'angle de corde de profil ($\beta$) des pales de rotor (3), l'angle d'attaque des aubes directrices (26) - en partant d'une région médiane de leur extension radiale, en comprenant le deuxième et troisième quarts de leurs longueurs - reste au moins constant en direction de l'extérieur, le cas échéant augmente en direction l'extérieur.

35

**11.** Propulseur de levage selon l'une des revendications précédentes, dans lequel le rapport entre la tangente de l'angle de corde de profil ($\beta$) au rayon le plus extérieur est d'au moins une partie des pales de rotor (3) à la tangente de l'angle de corde de profil ($\beta$) à un éloignement relatif X par rapport à ce point le plus extérieur, vers l'intérieur, satisfait au moins à peu près à la formule suivante :

$$\text{tg } \beta_i / \text{tg } \beta_x = A \, e^B \, C'$$

dans laquelle :

$\beta_i$ = angle de corde de profil à l'extrémité de pale de rotor la plus extérieure;

$\beta_x$ = angle de corde de profil à un éloignement X (mesuré comme une partie relative de la longueur de pale totale Xl = 1) depuis l'extrémité la plus extérieure de pale de rotor jusqu'au rayon du moyeu;

A = l'expression

$$1 - X \; (1 - \frac{1 - \text{rayon de moyeu}}{\text{rayon de pale de rotor}}) = 1 - x \; (1 - \upsilon)$$

$\nu$ = rapport de moyeu

$$(\; = \frac{\text{rayon de moyeu}}{\text{rayon de pale de rotor}} \;)$$

et

B et C' signifient chaque fois un facteur géométrique en fonction du rayon de courbure du bourrelet d'entrée par rapport à la pointe de pale de rotor, du rayon extérieur de soufflante et de l'angle de tangente $\alpha_i$ du bourrelet, à l'emplacement situé vis-à-vis de la pointe de pale de rotor.

Le rayon de moyeu ($r_n$) est défini comme étant le rayon du moyeu de rotor dans le plan des axes de rotation de pale.

**12.** Propulseur de levage selon la revendication 11 caractérisé en ce que l'évolution radiale des angles d'attaque de profil ($\beta$ et $\beta\infty$), à peu près proportionnels les uns par rapport aux autres, des pales de rotor (3), d'une soufflante axiale à un étage ou au moins du premier étage d'une soufflante axiale à plusieurs étages satisfont au moins à peu près à la relation suivante :

Pour des propulseurs de levage ayant une entrée ouverte, la tangente de l'angle de profil $\beta\infty_i$ le plus extérieur, par rapport à la tangente de l'angle de profil $\beta\infty_x$ à l'éloignement relatif X en allant de radialement à l'extérieur à radialement à l'intérieur, se comporte comme :

$$\frac{\text{tg } \beta\infty_i}{\text{tg } \beta\infty_x} = A \, e^B \, C \, D$$

où l'on a

$$\frac{\text{tg } \beta_i}{\text{tg } \beta_x} \approx \frac{\text{tg } \beta\infty_i}{\text{tg } \beta\infty_x}$$

avec les fonctions auxiliaires :

où

$$\Delta\alpha \quad = \quad \text{arc tg} \frac{X \; r_f \; (\; 1 \; - \; \upsilon) \; \cos \alpha_i}{r \; + \; X \; r_f \; (\; 1 \; - \; \upsilon) \; \sin \alpha_i}$$

$$\Delta\alpha_{max} \quad = \quad \text{arc tg} \frac{r_f \; (\; 1 \; - \; \upsilon) \; \cos \alpha_i}{r \; + \; r_f \; (\; 1 \; - \; \upsilon) \; \sin \alpha_i}$$

$\alpha_x = \alpha_i + \Delta\alpha + X (90° - \alpha_i - \Delta\alpha_{max.})$

$r_{ix} = r_f - r (\cos (90° - \alpha_i - \Delta\alpha) - \cos (90° - \alpha_i))$

$r_{fx} = r_f (1 - X (1 - \nu))$

$m = r_{ix} - r_{fx}$

$$q \quad = \quad \frac{m}{\cos (90° - \alpha_i - \Delta\alpha_i)}$$

$r_x = r (1 + f1 \; \text{tg} (X \cdot 90°)) + q$

$$q_a \quad = \quad (\frac{r + q}{\cos \Delta\alpha} - r) \; ( \; 1 \; - \; ( \; \frac{f2}{(\alpha_i/90)^2} \; - \; f2 \; ) \; X)$$

$$C \quad = \quad \frac{q \; [r_f \; (\; 1 \; - \; X \; (1 - \upsilon)) \; + \; m/2]}{q_a \; [r_f \; - \; 0,5 q_a \; \cos (90° - \alpha_i \; - \; (0,5 + X \; 0,5) \; \Delta\alpha)]}$$

$B = 0,5 \; q \; (1/r + 1/r_x)$

$A = 1 - X (1 - \nu)$

$$D \quad = \quad \frac{\sin \alpha_i}{\sin \alpha_x}$$

où :

$\alpha_i$ = angle de tangente méridienne extérieure

r = rayon de courbure méridien par rapport à la pointe de pale de rotor de soufflante

$r_f$ = rayon extérieur de rotor de soufflante

$\nu$ = rapport de moyeu

$f_1$ = 3, $f_2$ = 0.02

e = base du logarithme naturel.

**13.** Propulseur de levage selon la revendication 12, caractérisé en ce que le rapport entre les paramètres correspond au moins à peu près aux valeurs numériques relatives du tableau suivant (Figures 7B, 7D) :

| | | | | | | |
|---|---|---|---|---|---|---|
| $r_f$ | 1.0000 | 1.0000 | 1.0000 | 1.0000 | 1.0000 | 1.0000 |
| r | 0.3100 | 0.3100 | 0.3100 | 0.3100 | 0.3100 | 0.3100 |
| $\nu$ | 0.2000 | 0.2000 | 0.2000 | 0.2000 | 0.2000 | 0.2000 |
| X | 0.1250 | 0.2500 | 0.3750 | 0.5000 | 0.7500 | 0.9999 |
| $\alpha_i$ | 40.0000 | 40.0000 | 40.0000 | 40.0000 | 40.0000 | 40.0000 |
| $f_1$ | 3.0000 | 3.0000 | 3.0000 | 3.0000 | 3.0000 | 3.0000 |
| $f_2$ | 0.0200 | 0.0200 | 0.0200 | 0.0200 | 0.0200 | 0.0200 |
| $\Delta\alpha$ | 11.5671 | 19.2557 | 24.5620 | 28.3828 | 33.4525 | 36.6307 |
| $\Delta\alpha_{max}$ | 36.6317 | 36.6317 | 36.6317 | 36.6317 | 36.6317 | 36.6317 |
| $\Delta\alpha_x$ | 53.2391 | 62.5988 | 69.5751 | 75.0669 | 83.4787 | 89.9975 |
| $r_{ix}$ | 0.9564 | 0.9328 | 0.9193 | 0.9111 | 0.9021 | 0.8977 |
| $r_{fx}$ | 0.9000 | 0.8000 | 0.7000 | 0.6000 | 0.4000 | 0.2001 |
| m | 0.0564 | 0.1328 | 0.2193 | 0.3111 | 0.5021 | 0.6976 |
| q | 0.0720 | 0.1545 | 0.2429 | 0.3346 | 0.5238 | 0.7170 |
| $r_x$ | 0.5670 | 0.8498 | 1.1743 | 1.5746 | 3.0790 | 5.921.5908 |
| $q_a$ | 0.1791 | 0.1784 | 0.2888 | 0.4055 | 0.6473 | 0.8910 |
| c | 0.8698 | 0.8074 | 0.7745 | 0.7583 | 0.7555 | 0.7795 |
| B | 0.1797 | 0.3402 | 0.4951 | 0.6459 | 0.9299 | 1.1565 |
| A | 0.9000 | 0.8000 | 0.7000 | 0.6000 | 0.4000 | 0.2001 |
| D | 0.8024 | 0.7240 | 0.6859 | 0.6653 | 0.6470 | 0.6428 |
| Cmiv/Cmxv | 0.8353 | 0.8215 | 0.8717 | 0.9623 | 1.2397 | 1.5830 |
| $tg\beta\infty/tg\beta\infty x$ | 0.7518 | 0.6572 | 0.6102 | 0.5774 | 0.4955 | 0.3187 |

où ($c_{minv}$) signifie la composante verticale de la plus grande vitesse méridienne ($c_i$) inclinée sous l'angle ($\alpha_i$) (figures 7B et 8B) avec l'allure générale de la fonction en fonction du rayon de pale de la composante ($c_{mv}$) et, d'autre part, ($c_{mxv}$) signifie la composante verticale ($c_i$) d'une vitesse méridienne quelconque ($c_m$) à la distance (X) de la pointe de pale, radialement vers l'intérieur (figures 7A, 8A, 7B, 8B).

14. Propulseur de levage selon la revendication 12, caracérisé en ce que le rapport entre les paramètres correspond au moins à peu près aux valeurs numériques relatives du tableau suivant (Figures 8B, 8D) :

| | | | | | | |
|---|---|---|---|---|---|---|
| $r_f$ | 0.9308 | 0.9308 | 0.9308 | 0.9308 | 0.9308 | 0.9308 |
| r | 0.3100 | 0.3100 | 0.3100 | 0.3100 | 0.3100 | 0.3100 |
| $\nu$ | 0.2149 | 0.2149 | 0.2149 | 0.2149 | 0.2149 | 0.2149 |
| x | 0.1250 | 0.2500 | 0.3750 | 0.5000 | 0.7500 | 0.9999 |
| $\alpha_i$ | 60.0000 | 60.0000 | 60.0000 | 60.0000 | 60.0000 | 60.0000 |
| $f_1$ | 3.0000 | 3.0000 | 3.0000 | 3.0000 | 3.0000 | 3.0000 |
| $f_2$ | 0.0200 | 0.0200 | 0.0200 | 0.0200 | 0.0200 | 0.0200 |
| $\Delta\alpha$ | 6.6947 | 11.0394 | 14.0548 | 16.2588 | 19.2518 | 21.1820 |
| $\Delta_{\alpha max}$ | 21.1827 | 21.1827 | 21.1827 | 21.1827 | 21.1827 | 21.1827 |
| $\Delta_{\alpha x}$ | 67.7955 | 73.2437 | 77.3613 | 80.5674 | 85.8648 | 89.9995 |
| $r_{ix}$ | 0.9145 | 0.9051 | 0.9012 | 0.8981 | 0.8947 | 0.8929 |
| $r_{fx}$ | 0.8395 | 0.7481 | 0.6568 | 0.5654 | 0.3827 | 0.2001 |
| m | 0.0751 | 0.1580 | 0.2444 | 0.2327 | 0.5120 | 0.6928 |
| q | 0.0818 | 0.1670 | 0.2542 | 0.3425 | 0.5211 | 0.7011 |
| $r_x$ | 0.5768 | 0.8623 | 1.1856 | 1.5825 | 3.0763 | 5.921.5750 |
| $q_a$ | 0.0842 | 0.1749 | 0.2691 | 0.3651 | 0.5597 | 0.7550 |
| C | 0.9538 | 0.9288 | 0.9146 | 0.9069 | 0.9034 | 0.9099 |
| B | 0.2028 | 0.3663 | 0.5172 | 0.6607 | 0.9252 | 1.1309 |
| A | 0.9019 | 0.8037 | 0.7056 | 0.6075 | 0.4112 | 0.2150 |
| D | 0.9354 | 0.9044 | 0.8875 | 0.8776 | 0.8683 | 0.8660 |
| Cmiv/Cmxv | 1.0927 | 1.2116 | 1.3616 | 1.5411 | 1.9787 | 2.4415 |
| $tg\beta_\infty/tg\beta_{\infty x}$ | 0.9855 | 0.9738 | 0.9507 | 0.9361 | 0.8136 | 0.5249 |

où ($c_{minv}$) signifie la composante verticale de la plus grande vitesse méridienne ($c_i$) inclinée sous l'angle ($\alpha_i$) (figures 7B et 8B) avec l'allure générale de la fonction en fonction du rayon de pale de la composante ($c_{mv}$) et, d'autre part, ($c_{mxv}$) signifie la composante verticale ($c_i$) d'une vitesse méridienne quelconque ($c_m$) à la distance (X) de la pointe de pale, radialement vers l'intérieur (figures 7A, 8A, 7B, 8B).

**15.** Propulseur de levage selon la revendication 12, caracérisé en ce que le rapport entre les paramètres correspond au moins à peu près aux valeurs numériques relatives du tableau suivant (Figures 7B, 7D)

| $r_f$ | 0.8893 | 0.8893 | 0.8893 | 0.8893 | 0.8893 | 0.8893 |
|---|---|---|---|---|---|---|
| $r$ | 0.3100 | 0.3100 | 0.3100 | 0.3100 | 0.3100 | 0.3100 |
| $\nu$ | 0.2249 | 0.2249 | 0.2249 | 0.2249 | 0.2249 | 0.2249 |
| $X$ | 0.1250 | 0.2500 | 0.3750 | 0.5000 | 0.7500 | 0.9999 |
| $\alpha_i$ | 89.9990 | 89.9990 | 89.9990 | 89.9990 | 89.9990 | 89.9990 |
| $f_1$ | 3.0000 | 3.0000 | 3.0000 | 3.0000 | 3.0000 | 3.0000 |
| $f_2$ | 0.0200 | 0.0200 | 0.0200 | 0.0200 | 0.0200 | 0.0200 |
| $\Delta_\alpha$ | 0.0002 | 0.0004 | 0.0005 | 0.0005 | 0.0006 | 0.0007 |
| $\Delta_{\alpha max}$ | 0.0007 | 0.0007 | 0.0007 | 0.0007 | 0.0007 | 0.0007 |
| $\Delta_{\alpha x}$ | 89.9993 | 89.9994 | 89.9996 | 89.9997 | 89.9999 | 90.0000 |
| $r_{ix}$ | 0.8893 | 0.8893 | 0.8893 | 0.8893 | 0.8893 | 0.8893 |
| $r_{fx}$ | 0.8031 | 0.7071 | 0.6308 | 0.5447 | 0.3723 | 0.2001 |
| $m$ | 0.0862 | 0.1723 | 0.2585 | 0.3446 | 0.5170 | 0.6892 |
| $q$ | 0.0862 | 0.1723 | 0.2585 | 0.3446 | 0.5170 | 0.6892 |
| $r_x$ | 0.5812 | 0.8675 | 1.1899 | 1.5846 | 3.0722 | 5.921.5631 |
| $q_a$ | 0.0862 | 0.1723 | 0.2585 | 0.3446 | 0.5170 | 0.6892 |
| $C$ | 1.0000 | 1.0000 | 1.0000 | 1.0000 | 1.0000 | 1.0000 |
| $B$ | 0.2131 | 0.3773 | 0.5255 | 0.6646 | 0.9180 | 1.1117 |
| $A$ | 0.9031 | 0.8062 | 0.7093 | 0.6125 | 0.4187 | 0.2250 |
| $D$ | 1.0000 | 1.0000 | 1.0000 | 1.0000 | 1.0000 | 1.0000 |
| Cmiv/Cmxv | 1.2375 | 1.4583 | 1.6914 | 1.9438 | 2.5042 | 3.0396 |
| tg$\beta\infty$/tg$\beta\infty x$ | 1.1176 | 1.1757 | 1.1997 | 1.1905 | 1.0484 | 0.6838 |

où ($c_{minv}$) signifie la composante verticale de la plus grande vitesse méridienne ($c_i$) inclinée sous l'angle ($\alpha_i$) (figures 7B et 8B) avec l'allure générale de la fonction en fonction du rayon de pale de la composante ($c_{mv}$) et, d'autre part, ($c_{mxv}$) signifie la composante verticale ($c_i$) d'une vitesse méridienne quelconque ($c_m$) à la distance (X) de la pointe de pale, radialement vers l'intérieur (figures 7A, 8A, 7B, 8B).

**16.** Propulseur de levage selon la revendication 11, caracérisé en ce que, dans le cas d'un canal de rotation courbé et symétrique en rotation, l'allure radiale de l'angle d'incidence ($\beta$) d'au moins une partie des pales de rotor (3) satisfait au moins à peu près à la relation suivante :

La tangente de l'angle de profil ($\beta\infty_i$) le plus extérieur des pales de rotor, en tous cas pour le premier étage, se comporte par rapport à la tangente de l'angle de profil ($\beta\infty_x$) en direction radiale intérieure, à une distance relative (X) par rapport à l'extérieur, comme :

$$\frac{tg\ \beta\infty_i}{tg\ \beta\infty_x} = (\ 1 - X\ (1 - \nu))\ e^{B'}$$

où l'on a

$$\frac{tg\ \beta_i}{tg\ \beta_x} \approx \frac{tg\ \beta\infty_i}{tg\ \beta\infty_x} \quad et$$

$$B' = 0,5.X.r_f.(1 - \nu).\left(\frac{1}{r} + \frac{1}{r+(R-r)(X+f3\ \sin(X180))}\right)$$

et

$r_f$     = rayon extérieur du rotor de soufflante

$r$     = rayon de courbure méridien à l'extérieur, en regard de la pointe de pale de rotor de soufflante

R  = rayon de courbure médirien intérieur au moyeu

$\nu$  = rapport de moyeu = $r_n / r_f$

$\phi3$  = 0,2

et où de préférence la valeur de l'angle de tangente méridien extérieur ($\alpha_i$) est d'à peu près 77° à 90°.

17. Propulseur de levage selon la revendication 16, caracérisé en ce que le rapport entre les paramètres correspond au moins à peu prés aux valeurs numériques relatives du tableau suivant (Figures 14D, 14F)

| $r_f$ | 1,000 | 1,0000 | 1,0000 | 1,0000 | 1,0000 | 1,0000 | 1,000 |
|---|---|---|---|---|---|---|---|
| r | 0.4100 | 0.4100 | 0.4100 | 0.4100 | 0.4100 | 0.4100 | 0,4100 |
| R | 0,8500 | 0,8500 | 0,8500 | 0,8500 | 0,8500 | 0,8500 | 0,8500 |
| X | 0.0000 | 0.1250 | 0.2500 | 0.3750 | 0.5000 | 0.7500 | 1.0000 |
| $\nu$ | 0,3000 | 0,3000 | 0,3000 | 0,3000 | 0,3000 | 0,3000 | 0,3000 |
| $f_3$ | 0,2000 | 0,2000 | 0,2000 | 0,2000 | 0,2000 | 0,2000 | 0,2000 |
| A | 1,0000 | 0,9125 | 0,8250 | 0.7375 | 0.6500 | 0.4750 | 0.3000 |
| $r_x$ | 0.4100 | 0.5807 | 0,5851 | 0,6619 | 0,7250 | 0,8111 | 0,8500 |
| B | 0.0000 | 0.1941 | 0.3827 | 0.5184 | 0.6662 | 0.9639 | 0.2606 |
| Cmi/Cmx | 1.0000 | 1.2142 | 1.43724 | 1.6794 | 1,9507 | 2,6218 | 3,5277 |
| tg$\beta\infty$/tg$\beta\infty$x | 1.0000 | 1.1080 | 1.1857 | 1.3385 | 1.2580 | 1,2454 | 1,0583 |

où $c_{mi}$ est la valeur maximale de la vitesse méridienne ($c_m$) au rayon extérieur du "Fan" ($r_f$) et $c_{mx}$ est la valeur correspondante à la distance X de la pointe de pale, radialement vers l'intérieur.

18. Propulseur de levage selon la revendication 12, caractérisé en ce que le rapport entre les paramètres correspond au moins à peu près aux valeurs numériques relatives du tableau suivant (Figures 9D, 9B)

| $r_f$ | 1,0000 | 1,0000 | 1,0000 | 1,0000 | 1,0000 | 1,0000 | 1,000 |
|---|---|---|---|---|---|---|---|
| r | 0.3100 | 0.3100 | 0.3100 | 0.3100 | 0.3100 | 0.3100 | 0,4100 |
| R | 0,8500 | 0,8500 | 0,8500 | 0,8500 | 0,8500 | 0,8500 | 0,8500 |
| X | 0.0000 | 0.1250 | 0.2500 | 0.3750 | 0.5000 | 0.7500 | 1.0000 |
| $\nu$ | 0,3000 | 0,3000 | 0,3000 | 0,3000 | 0,3000 | 0,3000 | 0,3000 |
| $f_3$ | 0,2000 | 0,2000 | 0,2000 | 0,2000 | 0,2000 | 0,2000 | 0,2000 |
| A | 1,0000 | 0,9125 | 0,8250 | 0.7375 | 0.6500 | 0.4750 | 0.3000 |
| $r_x$ | 0.3100 | 0.42087 | 0,5253 | 0,5179 | 0,6950 | 0,8003 | 0,6500 |
| B | 0.0000 | 0.2451 | 0.4488 | 0.5358 | 0.8163 | 1.1748 | 1,5360 |
| Cmi/Cmx | 1.0000 | 1.2777 | 1.5665 | 1.8885 | 2,2821 | 3,2374 | 4,6460 |
| tg$\beta\infty$/tg$\beta\infty$x | 1.0000 | 1.1658 | 1.2824 | 1.3929 | 1,4704 | 1,5378 | 1,3838 |

où $c_{mi}$ est la valeur maximale de la vitesse méridienne $c_m$ sur le rayon extérieur du "Fan" ($r_f$) et $c_{mx}$ est la valeur correspondante à la distance X de la pointe de pale, radialement vers l'intérieur.

FIG. 1

EP 0 448 559 B1

FIG. 2

EP 0 448 559 B1

FIG. 3

FIG. 5

FIG. 4B

FIG. 4A

FIG. 4

FIG. 6B

FIG. 6

FIG.7A

FIG.7B

FIG.7C

FIG.7D

FIG.7E

FIG.8A

FIG.8B

FIG.8C

FIG.8D

FIG.8E

EP 0 448 559 B1

FIG.9A

FIG.9B

FIG.9C

FIG.9D

FIG.9E

49

FIG. 9G

FIG. 8G

FIG. 7G

FIG. 7H

FIG. 10 A

FIG.10 B

FIG. 10 C

FIG. 11

FIG.12 A

FIG.12 B

FIG. 13

EP 0 448 559 B1

FIG. 14 A

FIG. 14 B

$+\Delta\beta$

FIG. 14 D

FIG. 14 E

FIG. 14 F

FIG. 14 G

FIG. 14 C

FIG. 14 H

FIG.15

FIG. 16

FIG. 17

FIG. 17A

EP 0 448 559 B1

## FIG. 17 B

FIG. 18

EP 0 448 559 B1

FIG. 18A